# EUROPEAN PATENT APPLICATION

(11) **EP 4 185 047 A1**
(43) Date of publication of application: **24.05.2023**
(21) Application number: 21850410.8
(22) Date of filing: 07.07.2021
(51) Int. Cl.: H04W 72/04, H04W 72/12

(54) **RESOURCE SCHEDULING METHOD AND RELATED APPARATUS**

(30) Priority: 30.07.2020 CN 202010753669
(71) Applicant: Huawei Technologies Co., Ltd., Shenzhen, Guangdong 518129 (CN)
(72) Inventor: YU, Jian, Shenzhen, Guangdong 518129 (CN); LI, Yunbo, Shenzhen, Guangdong 518129 (CN); LIANG, Dandan, Shenzhen, Guangdong 518129 (CN); HU, Mengshi, Shenzhen, Guangdong 518129 (CN); GAN, Ming, Shenzhen, Guangdong 518129 (CN)
(74) Representative: Pfenning, Meinig & Partner mbB
(86) International application number: PCT/CN2021/104942
(87) International publication number: WO 2022/022249

(57) **Abstract**

This application provides a resource scheduling method and a related apparatus. The method includes: generating resource scheduling information based on a plurality of resource units obtained by dividing a to-be-allocated frequency domain resource, where the resource scheduling information includes resource unit allocation information for indicating one or more resource units and station information of a station to which the one or more resource units are allocated, the one or more resource units allocated to one station include at least one discrete resource unit, the discrete resource unit includes a plurality of subcarrier groups discrete in frequency domain, and one subcarrier group includes one subcarrier or at least two contiguous subcarriers; and sending the resource scheduling information. In this way, a frequency range covered by a single resource unit is wider, and transmission reliability can be improved. The solution of this application may be applied to a wireless local area network system supporting a next-generation Wi-Fi EHT protocol of IEEE 802.11, for example, 802.11 protocols such as 802.11be.

## Description

This application claims priority to Chinese Patent Application No. 202010753669.3, filed with the China National Intellectual Property Administration on July 30, 2020 and entitled "RESOURCE SCHEDULING METHOD AND RELATED APPARATUS", which is incorporated herein by reference in its entirety.

### TECHNICAL FIELD

This application relates to the field of wireless local area network technologies, and in particular, to a resource scheduling method and a related apparatus.

### BACKGROUND

With development of a wireless local area network (wireless local area network, WLAN), an orthogonal frequency division multiple access (orthogonal frequency division multiple access, OFDMA) technology is newly introduced, and an entire bandwidth is divided into a plurality of resource units (resource unit, RU). In other words, a frequency domain resource is allocated to a user in a unit of resource unit instead of channel. For example, one 20 MHz channel may include a plurality of resource units (resource unit, RU), and a form may be a 26-tone RU, a 52-tone RU, a 106-tone RU, or the like. Tone indicates a quantity of subcarriers. In addition, the RU may also be a 242-tone RU, a 484-tone RU, a 996-tone RU, or the like. These RUs include one or two contiguous frequency domain resources. Such an RU allocation manner is too simple, and RU transmission reliability is low.

### SUMMARY

Implementations of this application provide a resource scheduling method and a related apparatus, to improve RU transmission reliability.

According to a first aspect, an implementation of this application provides a resource scheduling method. The method includes: generating resource scheduling information based on a plurality of resource units obtained by dividing a to-be-allocated frequency domain resource, where the resource scheduling information includes resource unit allocation information for indicating one or more resource units and station information of a station to which the one or more resource units are allocated, the one or more resource units allocated to one station include at least one discrete resource unit, the discrete resource unit includes a plurality of subcarriers discrete in frequency domain, or in other words, the discrete resource unit includes a plurality of subcarrier groups discrete in frequency domain, and one subcarrier group includes one subcarrier or at least two contiguous subcarriers; and sending the resource scheduling information.

According to a second aspect, an implementation of this application provides a resource scheduling information obtaining method. The method includes: receiving resource scheduling information, where the resource scheduling information includes resource unit allocation information for indicating one or more resource units and station information of a station to which the one or more resource units are allocated, the one or more resource units allocated to one station include at least one discrete resource unit, the discrete resource unit includes a plurality of subcarriers discrete in frequency domain, or in other words, the discrete resource unit includes a plurality of subcarrier groups discrete in frequency domain, and one subcarrier group includes one subcarrier or at least two contiguous subcarriers; and determining a resource unit allocation status based on the resource scheduling information.

According to a third aspect, an implementation of this application provides an apparatus for sending resource scheduling information, and the apparatus includes a processing unit and a sending unit. The processing unit is configured to generate resource scheduling information based on a plurality of resource units obtained by dividing a to-be-allocated frequency domain resource, where the resource scheduling information includes resource unit allocation information for indicating one or more resource units and station information of a station to which the one or more resource units are allocated, the one or more resource units allocated to one station include at least one discrete resource unit, the discrete resource unit includes a plurality of subcarriers discrete in frequency domain, or in other words, the discrete resource unit includes a plurality of subcarrier groups discrete in frequency domain, and one subcarrier group includes one subcarrier or at least two contiguous subcarriers. The sending unit is configured to send the resource scheduling information.

According to a fourth aspect, an implementation of this application provides an apparatus for receiving resource scheduling information, and the apparatus includes a receiving unit and a processing unit. The receiving unit is configured to receive resource scheduling information, where the resource scheduling information includes resource unit allocation information for indicating one or more resource units and station information of a station to which the one or more resource units are allocated, the one or more resource units allocated to one station include at least one discrete resource unit, the discrete resource unit includes a plurality of subcarriers discrete in frequency domain, or in other words, the discrete resource unit includes a plurality of subcarrier groups discrete in frequency domain, and one subcarrier group includes one subcarrier or at least two contiguous subcarriers. The processing unit is configured to determine a resource unit allocation status based on the resource scheduling information.

The resource scheduling method in the first aspect of this application may be implemented by the apparatus for sending resource scheduling information in the third aspect, and the resource scheduling information obtaining method in the second aspect of this application may be implemented by the apparatus for receiving resource scheduling information in the fourth aspect.

The apparatus for sending resource scheduling information in the third aspect of this application may be understood as a communication apparatus, and the apparatus for sending resource scheduling information may be a station or an access point.

The apparatus for receiving resource scheduling information in the fourth aspect of this application may be understood as a communication apparatus, and the apparatus for sending resource scheduling information may be a station or an access point.

In the technical solution of this embodiment of this application, a discrete RU is defined, and discrete RUs can be allocated to a station, that is, a plurality of subcarriers or a plurality of subcarrier groups that are discrete in frequency domain can be allocated to one station, so that a frequency domain resource allocated to the station is more flexible, and is not limited to one or two contiguous frequency domain resources. Therefore, frequency domain resources can be more fully and flexibly used, frequency diversity of RUs allocated to a single user is improved, and subcarriers of a single RU covers a wider frequency range, thereby improving transmission reliability.

Optionally, one discrete resource unit includes at least 26 subcarriers.

This application further provides a definition of a contiguous RU. In this application, the contiguous RU is an RU including a plurality of contiguous subcarriers, or the contiguous RU is an RU including two contiguous subcarrier groups. A plurality of subcarriers included in each contiguous subcarrier group are contiguous, and only a guard (Guard) subcarrier, a null subcarrier, or a direct current (direct current, DC) subcarrier spacing exists between the two subcarrier groups. All RUs supported in the 802.11ax may be understood as contiguous RUs. Contiguous RUs may alternatively be referred to as common RUs (common RU, CRUs). Certainly, in another embodiment, the contiguous RU may have another name. A name of the contiguous RU is not limited in this application.

Optionally, a discrete RU includes N subcarriers. A quantity of MHz occupied by the discrete RU is greater than a quantity of MHz occupied by a contiguous RU with N subcarriers. A minimum granularity of quantity of MHz is 1.

The quantity of MHz occupied by the discrete RU is a quantity of MHz occupied by N subcarriers of the discrete RU. The bandwidth includes a plurality of MHz, and at least one subcarrier of a discrete RU is distributed on one MHz. Even if the subcarriers of the discrete RU do not occupy the entire MHz, the one MHz is counted into a quantity of MHz occupied by the discrete RU.

The maximum power spectrum density refers to a maximum transmit power for 1 MHz. A minimum granularity of the maximum power spectrum density is 1 MHz. When the transmit power of 1 MHz is not changed, for a discrete RU and a contiguous RU that include a same quantity of subcarriers, a quantity of MHz occupied by the discrete RU is greater than a quantity of MHz occupied by the contiguous RU. In this way, when the maximum power spectrum density is the same, the total transmit power of the discrete RU is higher than the total transmit power of the contiguous RU. In addition, compared with the contiguous RU, when data is transmitted by using the discrete RU, a transmit power of a single RU can be increased, thereby increasing a transmit power on a single subcarrier, and improving an equivalent signal-to-noise ratio (signal to noise ratio, SNR).

In some implementations, the at least one discrete resource unit allocated to the one station includes a pilot subcarrier. In this way, a receiving apparatus (for example, a station) for receiving resource scheduling information can perform phase estimation based on the pilot subcarrier.

The following provides some optional implementations related to a tone plan of a discrete resource unit.

In some optional implementations, a location of the pilot subcarrier in the discrete resource unit is the same as a location of the pilot subcarrier when the pilot subcarrier is used as a pilot subcarrier in a contiguous resource unit. In this way, on a premise that the location of the pilot subcarrier of the discrete RU is the same as the location of the pilot subcarrier of the contiguous RU, it is ensured that each discrete RU has a pilot subcarrier, so that an EHT-STF/EHT-LTF in a PPDU can remain unchanged, hybrid transmission of the discrete RU and a contiguous RU can be implemented, and a station can better perform phase correction.

In some optional implementations, in the plurality of discrete subcarrier groups included in the discrete resource unit, quantities of subcarriers between every two adjacent subcarrier groups are the same. In this way, the resource unit allocation information more easily indicates a subcarrier group in the discrete resource unit, and the receive end more easily receives each subcarrier group. Alternatively, in the plurality of discrete subcarrier groups included in the discrete resource unit, quantities of subcarriers between every two adjacent subcarrier groups are different. In this way, a frequency domain resource allocation manner is more flexible. Two adjacent subcarrier groups refer to two adjacent subcarrier groups of a discrete RU.

In some optional implementations, quantities of subcarriers included in each subcarrier group are the same, so that the resource unit allocation information more easily indicates the quantity of subcarriers in each subcarrier group. Alternatively, quantities of subcarriers included in at least two subcarrier groups are different, so that a frequency domain resource allocation manner is more flexible.

In some optional implementations, the discrete RU includes a plurality of sub-RUs, each sub-RU includes two subcarrier subgroups, and each subcarrier subgroup includes a plurality of subcarriers. In two subcarrier subgroups included in one sub-RU, an index of a subcarrier in one subcarrier subgroup is an odd number, and an index of a subcarrier in the other subcarrier subgroup is an even number. It may be understood that in a plurality of subcarriers in one subcarrier subgroup, there is one subcarrier between every two adjacent subcarriers. Each of the plurality of sub-RUs includes at least one pilot subcarrier. In this way, pilot subcarriers are evenly distributed, thereby improving accuracy of phase correction. Two adjacent subcarriers refer to two adjacent subcarriers of a discrete RU.

Further, each of the plurality of sub-RUs is located on different 20 MHz. In this way, a subcarrier of a single RU covers a wider frequency range, so that transmission reliability can be more effectively improved.

The following provides some optional implementations related to indicating a discrete resource unit.

In some optional implementations, the resource unit allocation information indicates an index of the discrete resource unit. Such an indication manner is simple, and a receiving apparatus (for example, a station) for receiving resource scheduling information can more easily obtain an allocated discrete resource unit.

In some optional implementations, the resource unit allocation information indicates an index of a start subcarrier and a subcarrier spacing in the discrete resource unit; or the resource unit allocation information indicates an index of an end subcarrier and a subcarrier spacing in the discrete resource unit; or the resource unit allocation information indicates an index of a start subcarrier, an index of an end subcarrier, and a subcarrier spacing in the discrete resource unit; or the resource unit indicates an index of each subcarrier in the discrete resource unit.

The start subcarrier is a subcarrier with a lowest frequency in the discrete resource unit, and the end subcarrier is a subcarrier with a highest frequency in the discrete resource unit. A quantity of subcarriers that belong to another resource unit that are used as a spacing of between every two adjacent subcarriers, or a difference between indexes of every two adjacent subcarriers is indicated.

In some optional implementations, the resource unit allocation information indicates an index of a first subcarrier in a start subcarrier group in a discrete resource unit, a quantity of subcarriers included in a subcarrier group, and a subcarrier group spacing; or the resource unit allocation information indicates an index of a last subcarrier in a start subcarrier group in a discrete resource unit, a quantity of subcarriers included in a subcarrier group, and a subcarrier group spacing; or the resource unit allocation information indicates an index of a first subcarrier in an end subcarrier group in a discrete resource unit, a quantity of subcarriers included in a subcarrier group, and a subcarrier group spacing; or the resource unit allocation information indicates an index of a last subcarrier in an end subcarrier group in a discrete resource unit, a quantity of subcarriers included in a subcarrier group, and a subcarrier group spacing.

The start subcarrier group is a subcarrier group with a lowest frequency in the discrete unit, and the end subcarrier group is a subcarrier group with a highest frequency in the discrete unit. The subcarrier group spacing indicates a quantity of subcarriers between every two adjacent subcarrier groups. A quantity of guard subcarriers, null subcarriers, and direct current subcarriers is not included.

In some optional implementations, the resource scheduling information further includes resource unit type indication information, and the resource unit type indication information indicates whether a resource unit allocated to the station is a discrete resource unit or a contiguous resource unit. The RU type indication information may also be understood as discrete RU/contiguous RU indication information.

In a downlink multi-user transmission scenario, a signal field in a PPDU includes RU type indication information.

Specifically, the signal field in the PPDU includes a universal signal field U-SIG (universal SIG, U-SIG) and an extremely high throughput signal field or an extremely high throughput signal field (extremely high throughput, EHT-SIG). The EHT-SIG includes a common field and a user specific field.

In a possible implementation, the U-SIG or the common field includes RU type indication information, to indicate that all RUs included in the bandwidth are discrete RUs or contiguous RUs. In this way, it can be indicated to a receive end that all RUs included in the bandwidth are discrete RUs or contiguous RUs, so that the receive end can read the resource unit allocation information based on a correspondence between a discrete RU or a contiguous RU and a subcarrier. When the RU type indication information indicates that all RUs included in the bandwidth are discrete RUs, the bandwidth may include only discrete RUs, or may include a discrete RU and a special contiguous RU.

In another possible implementation, the user field includes RU type indication information, to indicate that an RU allocated to a station corresponding to the user field is a discrete RU or a contiguous RU. In this way, the bandwidth can support hybrid transmission of a discrete RUs and a contiguous RU, that is, the bandwidth may include both a discrete RU and a contiguous RU. In addition, based on the RU type indication information in the user field, the receive end can determine whether an RU allocated to the receive end is a discrete RU or a contiguous RU, so that the receive end (for example, a station) can read resource unit allocation information based on a correspondence between a discrete RU or a contiguous RU and a subcarrier, to accurately obtain a subcarrier range of a resource unit allocated to the receive end.

In an uplink multi-user transmission scenario, a trigger frame sent by the access point to the station includes RU type indication information.

In a possible implementation, the trigger frame includes a common field and a user information list field. A common field in the trigger frame includes RU type indication information. In this way, a type of RUs included in the bandwidth can be indicated to a receive end, so that the receive end can obtain the resource unit allocation information based on a correspondence between a discrete RU or a contiguous RU and a subcarrier. When the RU type indication information indicates that all RUs included in the bandwidth are discrete RUs, the bandwidth may include only discrete RUs, or may include a discrete RU and a special contiguous RU.

In another possible implementation, the trigger frame includes the user information list field, the user information list field includes one or more user fields, and the user field includes RU type indication information for indicating that an RU allocated to a station corresponding to the user field is a discrete RU or a contiguous RU. In this way, the bandwidth can support hybrid transmission of a discrete RUs and a contiguous RU, that is, the bandwidth may include both a discrete RU and a contiguous RU. In addition, based on the RU type indication information in the user field, the receive end can determine whether an RU allocated to the receive end is a discrete RU or a contiguous RU, so that the receive end can obtain resource unit allocation information based on a correspondence between a discrete RU or a contiguous RU and a subcarrier, to accurately obtain a subcarrier range of a resource unit allocated to the receive end.

According to a fifth aspect, an implementation of this application further provides a communication apparatus. The communication apparatus may include a processor and a transceiver, and optionally further include a memory. When the processor executes a computer program or instructions in the memory, the method according to any implementation of the first aspect, the second aspect, the fifth aspect, the sixth aspect, the ninth aspect, or the tenth aspect is performed.

According to a sixth aspect, an implementation of this application further provides a computer-readable storage medium. The computer-readable storage medium stores computer instructions, and the computer instructions instruct a communication device to perform the method in any one of the implementations of the first aspect and the second aspect.

According to a seventh aspect, an implementation of this application further provides a computer program product. The computer program product includes a computer program. When the computer program runs on a computer, the computer is enabled to perform the method according to any implementation of the first aspect, the second aspect, the fifth aspect, the sixth aspect, the ninth aspect, or the tenth aspect.

According to an eighth aspect, this application further provides a processor, configured to perform any method in the first aspect and the second aspect. In a process of performing the methods, processes of sending the foregoing information and receiving the foregoing information in the foregoing methods may be understood as a process of outputting the foregoing information by the processor and a process of receiving the foregoing input information by the processor. Specifically, when outputting the foregoing information, the processor outputs the information to a transceiver, so that the transceiver transmits the information. Further, after the foregoing information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

In this way, unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In a specific implementation process, the processor may be a processor specially configured to perform the methods, or may be a processor, for example, a general purpose processor, that executes computer instructions in a memory to perform the methods. The memory may be a non-transitory (non-transitory) memory such as a read-only memory (read only memory, ROM). The memory and the processor may be integrated on a same chip, or may be separately disposed on different chips. A type of the memory and a manner of disposing the memory and the processor are not limited in embodiments of the present invention.

According to a ninth aspect, this application provides a chip system. The chip system includes a processor and an interface, configured to support a communication transmission device in implementing a function in the method in any one of the first aspect to the fourth aspect, for example, determining or processing at least one of data and information in the foregoing method. In a possible design, the chip system further includes a memory, and the memory is configured to store information and data that are necessary for the foregoing communication apparatus. The chip system may include a chip, or may include a chip and another discrete device.

According to a tenth aspect, this application provides a functional entity, where the functional entity is configured to implement the methods according to the first aspect and the second aspect.

### BRIEF DESCRIPTION OF DRAWINGS

FIG. 1 is a schematic diagram of a network architecture of a communication system according to an embodiment of this application;
FIG. 2 is a schematic diagram of a structure of a communication apparatus according to an embodiment of this application;
FIG. 3 is a schematic diagram of a structure of a chip according to an embodiment of this application;
FIG. 4A is a schematic diagram of a possible resource unit allocation manner in a case of 20 MHz;
FIG. 4B is a schematic diagram of a possible resource unit allocation manner in a case of 40 MHz;
FIG. 4C is a schematic diagram of a possible resource unit allocation manner in a case of 80 MHz;
FIG. 5 is a schematic flowchart of a resource scheduling method according to an embodiment of this application;
FIG. 6A is a schematic diagram of resource unit allocation according to an embodiment of this application;
FIG. 6B is a schematic diagram of resource unit allocation according to an embodiment of this application;
FIG. 6C is a schematic diagram of resource unit allocation according to an embodiment of this application;
FIG. 6D is a schematic diagram of resource unit allocation according to an embodiment of this application;
FIG. 6E is a schematic diagram of resource unit allocation according to an embodiment of this application;
FIG. 7 is a schematic diagram of resource unit allocation according to an embodiment of this application;
FIG. 8 is a schematic diagram of a structure of a PPDU;
FIG. 9 is a schematic diagram of a PPDU sending process;
FIG. 10 is a schematic diagram of a structure of an apparatus for sending resource scheduling information according to an embodiment of this application; and
FIG. 11 is a schematic diagram of a structure of an apparatus for receiving resource scheduling information according to an embodiment of this application.

### DESCRIPTION OF EMBODIMENTS

The following describes technical solutions of this application with reference to accompanying drawings.

Embodiments of this application provide a resource scheduling method for a wireless communication system. The wireless communication system may be a wireless local area network (Wireless local area network, WLAN) or a cellular network, and the method may be implemented by a communication device in the wireless communication system or a chip or a processor in the communication device. In the wireless local area network, the communication device supports communication performed by using an IEEE 802.11 series protocol, and the IEEE 802.11 series protocol includes: 802.11be, 802.11ax, or 802.11a/b/g/n/ac.

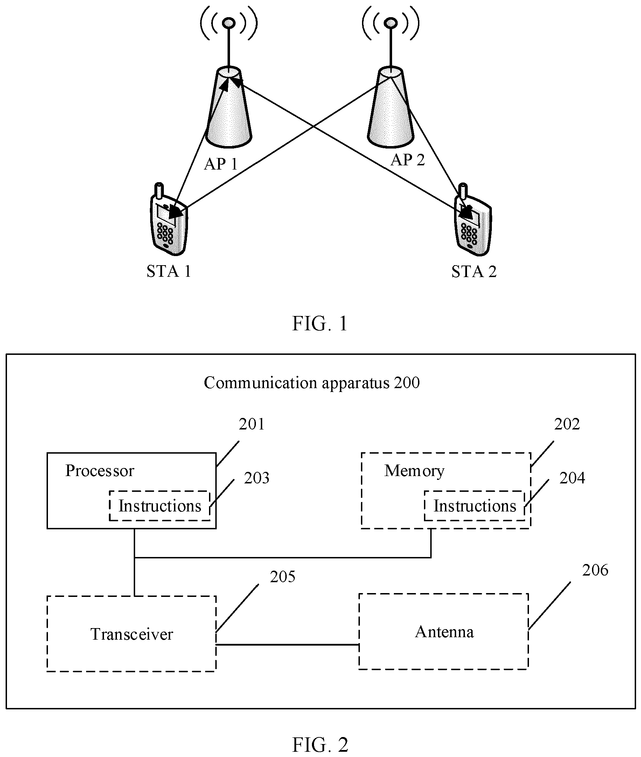

FIG. 1 is used as an example to describe a network structure to which the resource scheduling method in this application is applicable. FIG. 1 is a schematic diagram depicting a network structure according to an embodiment of this application. The network structure may be a wireless local area network. The network structure may include one or more access point (access point, AP) stations and one or more non-access point stations (non access point station, non-AP STA). For ease of description, an access point station is referred to as an access point (AP), and a non-access point station is referred to as a station (STA) in this specification. The AP is, for example, an AP 1 and an AP 2 in FIG. 1, and the STA is, for example, a STA 1 and a STA 2 in FIG. 1.

The access point may be an access point used by a terminal device (such as a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a wireless fidelity (wireless fidelity, Wi-Fi) chip. The access point may be a device that supports the 802.11be standard. Alternatively, the access point may be a device that supports a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard. The access point in this application may be an extremely high throughput (extremely high throughput, EHT) AP, or may be an access point applicable to a future Wi-Fi standard.

The access point may include a processor and a transceiver. The processor is configured to control and manage an action of the access point, and the transceiver is configured to receive or send information.

The station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, or the like. Optionally, the station may support the 802.11be standard. The station may also support a plurality of wireless local area network (wireless local area network, WLAN) standards of the 802.11 family such as the 802.11be standard, the 802.11ax standard, the 802.11ac standard, the 802.11n standard, the 802.11g standard, the 802.11b standard, and the 802.11a standard.

The station may include a processor and a transceiver. The processor is configured to control and manage an action of the access point, and the transceiver is configured to receive or send information.

The access point in this application may be an extremely high throughput (extremely high throughput, EHT) STA, or may be a STA applicable to a future generation of Wi-Fi standards.

For example, the access point and the station may be devices used in the internet of vehicles, internet of things nodes, sensors, or the like in the internet of things (internet of things, IoT), smart cameras, smart remote controls, smart water or electricity meters, or the like in smart home, sensors in smart city, and the like.

The access point and the station in embodiments of this application may also be collectively referred to as communication apparatuses. The communication apparatus may include a hardware structure and a software module, and the foregoing functions are implemented in a form of a hardware structure, a software module, or a combination of the hardware structure and the software module. A function in the foregoing functions may be performed in a form of a hardware structure, a software module, or a combination of the hardware structure and the software module.

FIG. 2 is a schematic diagram of a structure of a communication apparatus according to an embodiment of this application. As shown in FIG. 2, the communication apparatus 200 may include a processor 201 and a transceiver 205, and optionally further includes a memory 202. The communication apparatus may be used as an apparatus for sending resource scheduling information, or may be used as an apparatus for receiving resource scheduling information.

The transceiver 205 may be referred to as a transceiver unit, a transceiver machine, a transceiver circuit, or the like, and is configured to implement a transceiver function. The transceiver 205 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 202 may store a computer program, software code, or instructions 204, where the computer program, the software code, or the instructions 204 may also be referred to as firmware. The processor 201 may control a MAC layer and a PHY layer by running a computer program, software code, or instructions 203 in the processor 201, or by invoking the computer program, the software code, or the instructions 204 stored in the memory 202, to implement the resource scheduling method provided in the following embodiments of this application. The processor 201 may be a central processing unit (central processing unit, CPU), and the memory 202 may be, for example, a read-only memory (read-only memory, ROM), or a random access memory (random access memory, RAM).

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application specific integrated circuit, ASIC), a printed circuit board (printed circuit board, PCB), an electronic device, or the like.

The communication apparatus 200 may further include an antenna 206. The modules included in the communication apparatus 200 are merely examples for description, and are not limited in this application.

As described above, the communication apparatus 200 described in the foregoing embodiment may be an access point or a station. However, the scope of the communication apparatus described in this application is not limited thereto, and the structure of the communication apparatus may not be limited to FIG. 2. The communication apparatus may be an independent device or may be a part of a large device. For example, the communication apparatus may be implemented in the following form:
(1) an independent integrated circuit IC, a chip, a chip system, or a subsystem; (2) a set including one or more ICs, where optionally, the set of ICs may also include a storage component for storing data and instructions; (3) a module that can be embedded in other devices; (4) a receiver, an intelligent terminal, a wireless device, a handheld device, a mobile unit, a vehicle-mounted device, a cloud device, an artificial intelligence device, or the like; or (5) others.

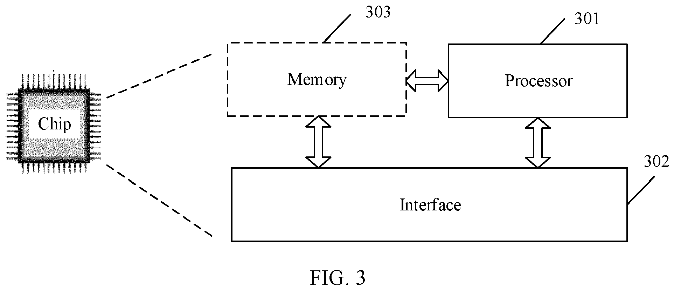

For the communication apparatus implemented in the form of the chip or the chip system, refer to a schematic diagram of a structure of a chip shown in FIG. 3. The chip shown in FIG. 3 includes a processor 301 and an interface 302. There may be one or more processors 301, and there may be a plurality of interfaces 302. The interface 302 is configured to receive and transmit a signal. Optionally, the chip or the chip system may include a memory 303. The memory 303 is configured to store program instructions and data that are necessary for the chip or the chip system.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

Orthogonal frequency division multiple access (orthogonal frequency division multiple access, OFDMA) can be used between the AP and the STA. In an OFDMA transmission scenario, the WLAN protocol divides a spectrum bandwidth into several resource units (resource units, RUs). According to the 802.11 ax standard, for bandwidths of 20 MHz, 40 MHz, 80 MHz, and 160 MHz, the bandwidths may be divided into a plurality of types of RUs. An RU size may be a 26-tone RU, a 52-tone RU, a 106-tone RU, a 242-tone RU, a 484-tone RU, a 996-tone RU, or the like. A tone indicates a subcarrier. For example, a 26-tone RU indicates an RU including 26 contiguous subcarriers, or an RU including a group of 13 contiguous subcarriers and another group of 13 contiguous subcarriers.

In the 802.11be standard, the foregoing resource allocation manner in which a bandwidth is divided into several resource units is still used. For 20 MHz, 40 MHz, 80 MHz, 160 MHz and 320 MHz, a spectrum bandwidth may be divided into a plurality of types of RUs, and an RU size may be a 26-tone RU, a 52-tone RU, a 106-tone RU, a 242-tone RU, a 484-tone RU, a 996-tone RU, or the like. The 26-tone RU may be allocated to one user. Generally, an RU with a size greater than or equal to 242-tone can be allocated to one or more users. The user in this application may be understood as a STA. An RU on a bandwidth includes a data (Data) subcarrier and a pilot (Pilot) subcarrier. The data subcarrier carries data information from an upper layer. The pilot subcarrier transfers a fixed value, and is used by a receive end to estimate a phase and perform phase correction.

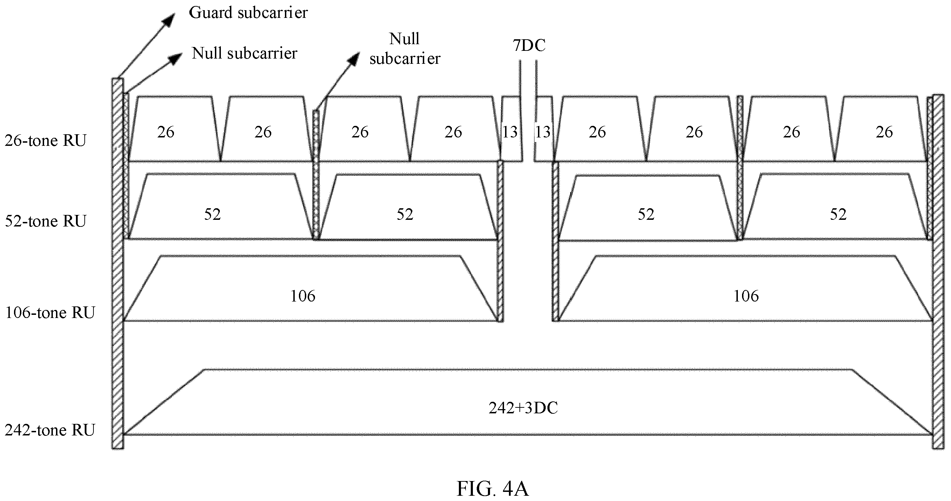

When a bandwidth is 20 MHz, FIG. 4A is a schematic diagram of a possible resource unit allocation manner when the bandwidth is 20 MHz. The entire 20 MHz bandwidth may include an entire 242-tone RU or various combinations of a 26-tone RU, a 52-tone RU, and a 106-tone RU. In addition to contiguous RUs of the bandwidth for data transmission, some guard (Guard) subcarriers, null subcarriers, or direct current (direct current, DC) subcarriers are further included.

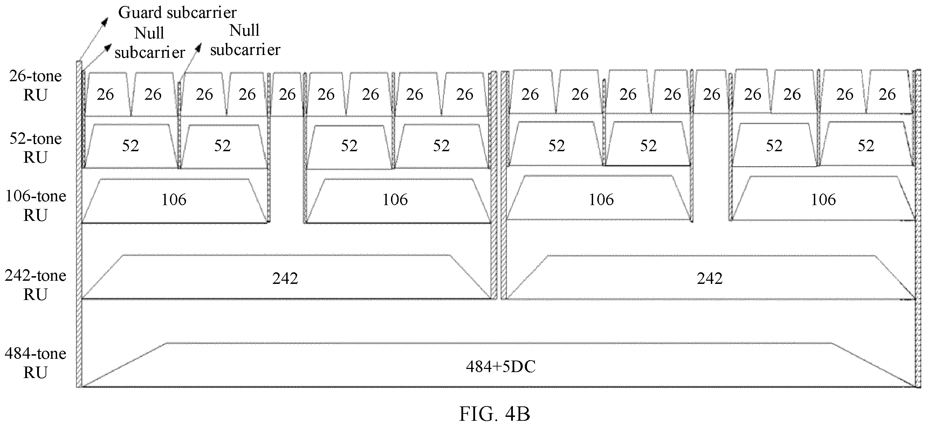

When a bandwidth is 40 MHz, FIG. 4B is a schematic diagram of a possible resource unit allocation manner when the bandwidth is 40 MHz. The entire bandwidth is approximately equivalent to replications of a 20 MHz tone plan. The 40 MHz bandwidth may include an entire 484-tone RU or various combinations of a 26-tone RU, a 52-tone RU, a 106-tone RU, and a 242-tone RU.

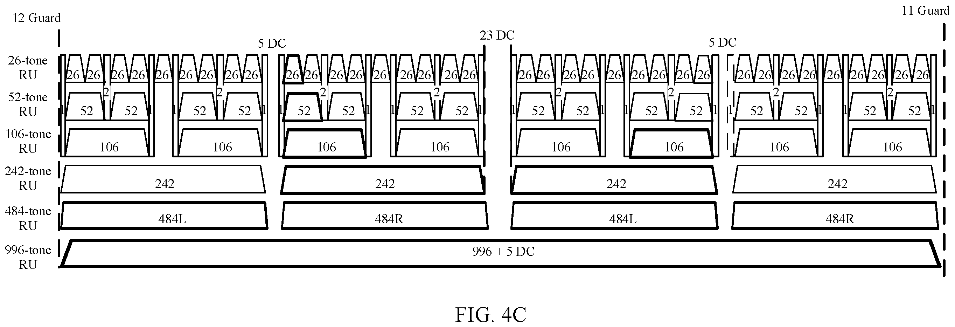

FIG. 4C is a schematic diagram of a possible resource unit allocation manner when a bandwidth is 80 MHz. When the channel bandwidth is 80 MHz, the entire bandwidth is approximately equivalent to two replications of a 40 MHz tone plan. The 80 MHz bandwidth may include an entire 996-tone RU or various combinations of a 484-tone RU, a 242-tone RU, a 106-tone RU, a 52-tone RU, and a 26-tone RU.

When a bandwidth is 160 MHz or 80+80 MHz, the entire bandwidth may be considered as two replications of an 80 MHz tone plan. The entire bandwidth may include an entire 2*996-tone RU, or may include various combinations of 26-tone RUs, 52-tone RUs, 106-tone RUs, 242-tone RUs, 484-tone RUs, or 996-tone RUs. The 2*996-tone RU consists of two contiguous 996-tone RU subcarriers.

Similarly, when the bandwidth is 320 MHz, the entire bandwidth may be considered as two replications of a 160 MHz tone plan. The entire bandwidth may include an entire 4*996-tone RU or various combinations of a 26-tone RU, a 52-tone RU, a 106-tone RU, a 242-tone RU, a 484-tone RU, or a 996-tone RU.

The following lists, with reference to tables, a subcarrier range of an RU and a location of a pilot subcarrier on a bandwidth when the bandwidth is 20 MHz and when the bandwidth is 40 MHz.

RUX is an RU index, and [a, b] indicates that a subcarrier range of the RU is a subcarrier whose index is a to a subcarrier whose index is b, including a and b. x, y, ... in {x, y, ...} are indexes of pilot subcarriers.

For ease of description, in this application, a subcarrier whose index is x is represented as a subcarrier x.

As shown in Table 1, when a bandwidth is 20 MHz, a 26-tone RU on the bandwidth may be any one or more of an RU 1 to an RU 9 in a row of 26-tone RU in Table 1. Each 26-tone RU includes two pilot subcarriers.

For example, the 26-tone RU on the bandwidth is the RU 1 in the row of 26-tone RU in Table 1, and a subcarrier range of the 26-tone RU is a subcarrier -121 to a subcarrier -96, where the subcarrier -116 and the subcarrier -102 are pilot subcarriers.

A 52-tone RU on the bandwidth may be any one or more of an RU 1 to an RU 4 in a row of 52-tone RU in Table 1. Each 52-tone RU includes four pilot subcarriers.

For example, the 52-tone RU on the bandwidth is the RU 1 in a row of 52-tone RU in Table 1, and a subcarrier range of the 52-tone RU is a subcarrier -121 to a subcarrier -70, where the subcarrier -116, the subcarrier -102, the subcarrier -90, and the subcarrier -76 are pilot subcarriers.

Similarly, a 106-tone RU on the bandwidth may be any one or more of an RU 1 to an RU 2 in a row of 106-tone RU in Table 1. Each 106-tone RU includes four pilot subcarriers. A subcarrier range of the RU 1 is a subcarrier -122 to a subcarrier -17, where the subcarrier -116, the subcarrier -90, the subcarrier -48, and the subcarrier -22 are pilot subcarriers. A subcarrier range of the RU 2 is a subcarrier 17 to a subcarrier 122, where the subcarrier 22, the subcarrier 48, the subcarrier 90, and the subcarrier 116 are pilot subcarriers.

A 242-tone RU on the bandwidth may be a 242-tone RU 1 in Table 1. A subcarrier range of the 242-tone RU 1 is a subcarrier -122 to a subcarrier -2 and a subcarrier 2 to a subcarrier 122, where the subcarrier -116, the subcarrier -90, the subcarrier -48, the subcarrier -22, the subcarrier 22, the subcarrier 48, the subcarrier 90, and the subcarrier 116 are pilot subcarriers.

**Table 1**

| RU type | RU index, subcarrier range, and location of pilot subcarrier | | | | |
|---|---|---|---|---|---|
| 26-tone RU | RU 1 | RU2 | RU 3 | RU 4 | RU 5 |
| | [-121: -96] | [-95: -70] | [-68: -43] | [-42: -17] | [-16: -4, 4: 16] |
| | {-116, -102} | {-90, -76} | {-62, -48} | {-36, -22} | {-10, 10} |
| | RU6 | RU7 | RU8 | RU 9 | |
| | [17: 42] | [43: 68] | [70: 95] | [96: 121] | |
| | {22, 36} | {48, 62} | {76, 90} | {102, 116} | |
| 52-tone RU | RU 1 | RU 2 | RU 3 | RU4 | |
| | [-121: -70] | [-68: -17] | [17: 68] | [70: 121] | |
| | {-116, -102,-90, -76} | {-62, -48, -36, -22} | {122, 36, 48, 62} | {76, 90, 102, 116} | |
| 106-tone RU | RU 1 | | RU 2 | | |
| | [-122: -17] | | [17: 122] | | |
| | {-116, -90, -48, -22} | | {22, 48, 90, 116} | | |
| 242-tone RU | RU 1 | | | | |
| | [-122: -2, 2:122] | | | | |
| | {-116, -90, -48, -22, 22, 48, 90, 116} | | | | |

As shown in Table 2, when the bandwidth is 40 MHz, a 26-tone RU on the bandwidth may be one or more of an RU 1 to RU 18 in a row of which 26-tone RU in Table 2. Each 26-tone RU includes two pilot subcarriers.

**Table 2**

| RU type | RU index, subcarrier range, and location of pilot subcarrier | | | | |
|---|---|---|---|---|---|
| 26-tone RU | RU 1 | RU 2 | RU 3 | RU4 | RU 5 |
| | [-243: -218] | [-217: -192] | [-189: -164] | [-163: -138] | [-136: -111] |
| | {-238, -224} | {-212, -198} | {-184, -170} | {-158, -144} | {-130, -116} |
| | RU 6 | RU 7 | RU 8 | RU 9 | |
| | [-109: -84] | [-83: -58] | [-55: -30] | [-29: -4] | |
| | {-104, -90} | 1-78, -64} | {-50, -36} | {-24, -10} | |
| | RU 10 | RU 11 | RU 12 | RU 13 | CRU 14 |
| | [4: 29] | [30: 55] | [58: 83] | [84: 109] | [111: 136] |
| | {10, 24} | {36, 50} | {64, 78} | {90, 104} | {116, 130} |
| | RU 15 | RU 16 | RU 17 | RU 18 | |
| | [138: 163] | [164: 189] | [192: 217] | [218: 243] | |
| | {144, 158} | {170, 184} | {198, 212} | {224, 238} | |
| 52-tone RU | RU 1 | RU 2 | RU 3 | RU4 | |
| | [-243: -192] | [-189: -138] | [-109: -58] | [-55: -4] | |
| | {-238, -224,-212, -198} | {-184, -170,-158, -144} | {-104, -90,-78, -64} | {-50, -36, -24, -10} | |
| | RU 5 | RU 6 | RU7 | RU8 | |
| | [4: 55] | [58: 109] | [138: 189] | [192: 243] | |
| | {10, 24, 36, 50} | {64, 78, 90, 104} | {144, 158, 170, 184} | {198, 212, 224, 238} | |
| 106-tone RU | RU 1 | RU 2 | RU3 | RU 4 | |
| | [-243: -138] | [-109: -4] | [4: 109] | [138: 243] | |
| | {-238, -212, - 170, -144} | {-104, -78, - 36, -10} | {10, 36, 78, 104} | {144, 170, 212, 238} | |
| 242-tone RU | RU 1 | | RU 2 | | |
| | [-244: -3] | | [3: 244] | | |
| | 1-238, -212, -170, -144, -104, - 78, -36, -10} | | {10, 36, 78, 104, 144, 170, 212, 238} | | |
| 484-tone RU | RU 1 | | | | |
| 16 pilots | [-244: -3, 3: 244] | | | | |
| | 1-238, -212, -170, -144, -104, -78, -36, -10, 10, 36, 78, 104, 144, 170, 212, 238} | | | | |

For example, the 26-tone RU on the bandwidth is the RU 1 in the row of 26-tone RU in Table 2, and a subcarrier range of the 26-tone RU is a subcarrier -243 to a subcarrier -218, where the subcarrier -238 and the subcarrier -224 are pilot subcarriers.

A 52-tone RU on the bandwidth may be one or more of an RU 1 to an RU 8 in a row of 52-tone RU in Table 2. Each 52-tone RU includes four pilot subcarriers.

For example, the 52-tone RU on the bandwidth is the RU 1 in a row of 52-tone RU in Table 2, and a subcarrier range of the 52-tone RU is a subcarrier -243 to a subcarrier -192, where the subcarrier -238, the subcarrier -224, the subcarrier -212, and the subcarrier -198 are pilot subcarriers.

Similarly, a 106-tone RU on the bandwidth may be any one or more of an RU 1 to an RU 4 in a row of 106-tone RU in Table 2. Each 106-tone RU includes four pilot subcarriers. A 242-tone RU on the bandwidth may be one or more of an RU 1 and an RU 2 in a row of 242-tone RU in the first column in Table 2. A 484-tone RU on the bandwidth may be an RU 1 in a row of 484-tone RU in the first column in Table 2.

The standard also specifies an RU that may be included in a bandwidth, a subcarrier range corresponding to the RU that may be included, and a pilot subcarrier when the bandwidth is 80 MHz, 160 MHz, or 320 MHz, and this is not listed one by one herein.

The 26-tone RU, 52-tone RU, 106-tone RU, the 242-tone RU, and the 484-tone RU in Table 1 and Table 2 are RUs including a plurality of contiguous subcarriers, or RUs including two contiguous subcarrier groups. Such RUs may be understood as contiguous RUs.

It can be learned that in existing resource unit allocation, only contiguous RUs can be allocated to one or more users. A resource unit allocation manner is too simple, and resource unit transmission reliability is low.

Embodiments of this application provide a resource allocation solution based on a discrete RU, so as to improve reliability of resource unit transmission.

In this application, the contiguous RU is an RU including a plurality of contiguous subcarriers, or the contiguous RU is an RU including two contiguous subcarrier groups. A plurality of subcarriers included in each contiguous subcarrier group are contiguous, and only a guard (Guard) subcarrier, a null subcarrier, or a direct current (direct current, DC) subcarrier spacing exists between the two subcarrier groups. All RUs supported in the 802.11 ax may be understood as contiguous RUs. Contiguous RUs may alternatively be referred to as common RUs (common RU, CRUs). Certainly, in another embodiment, the contiguous RU may have another name. A name of the contiguous RU is not limited in this application.

The discrete RU in this application includes a plurality of subcarriers discrete in frequency domain. The plurality of discrete subcarriers may be partially discrete, or may be completely discrete. In other words, the plurality of discrete subcarriers may include some subcarriers that are contiguous in frequency, and some subcarriers that are noncontiguous in frequency; or the plurality of discrete subcarriers may be completely noncontiguous in frequency.

In other words, the discrete RU includes a plurality of subcarrier groups that are discrete in frequency domain, and one subcarrier group includes one subcarrier or a plurality of contiguous subcarriers. Quantities of subcarriers included in the plurality of subcarrier groups may be the same or may be different. For example, a quantity of subcarriers in each subcarrier group may be 1. For another example, a 26-tone RU may include four subcarrier groups, and quantities of subcarriers in the four subcarrier groups may be 7, 7, 6, and 6 respectively.

Discrete RUs are also referred to as (discontiguous RU, DRU). Certainly, in another embodiment, the discrete RU may have another name. A name of the discrete RU is not limited in this application. In this application, a quantity of subcarrier groups included in one discrete RU is greater than 2.

An RU that includes only two contiguous subcarrier groups shown in an existing resource allocation manner is not a discrete RU in this embodiment of this application. For example, a 26-tone RU (for example, the RU 5 in the row of 26-tone RU in Table 1) formed by a group of 13 contiguous subcarriers and another group of 13 contiguous subcarriers is a contiguous RU rather than a discrete RU. A 242-tone RU (for example, the RU 1 in the row of 242-tone RU in Table 1) formed by a group of 121 contiguous subcarriers and another group of 121 contiguous subcarriers is a contiguous RU rather than a discrete RU. A 484-tone RU (for example, the RU 1 in the row of 484-tone RU in Table 2) formed by a group of 242 contiguous subcarriers and another group of 242 contiguous subcarriers is a contiguous RU rather than a discrete RU. Similarly, a 996-tone RU formed by a group of 484 contiguous subcarriers and another group of 484 contiguous subcarriers is a contiguous RU rather than a discrete RU. Such RUs may also be referred to as special contiguous RUs or contiguous RUs in a broad sense.

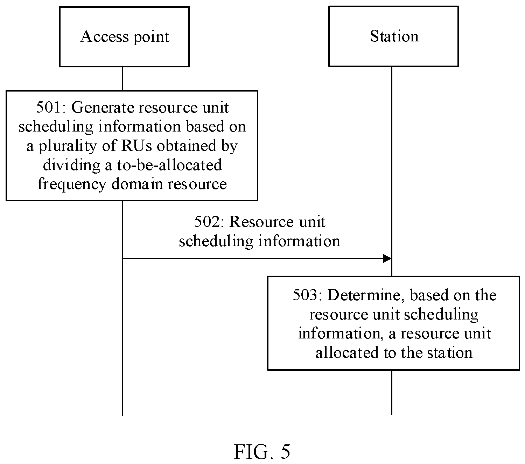

Specifically, a resource allocation solution in embodiments of this application may be implemented by using the resource scheduling method in embodiments of this application. FIG. 5 is a schematic flowchart of a resource scheduling method. The resource scheduling method includes the following steps.

501: An access point generates resource unit scheduling information based on a plurality of RUs obtained by dividing a to-be-allocated frequency domain resource.

The resource scheduling information includes resource unit allocation information for indicating one or more RUs, and station information of a station to which the one or more RUs are allocated, where the one or more RUs allocated to one station include at least one discrete RU.

The to-be-allocated frequency domain resource may be a complete bandwidth, or may be a frequency domain resource that is not punctured in a bandwidth.

That the one or more RUs allocated to one station include at least one discrete RU means that only one discrete RU may be allocated to the station, or a plurality of discrete RUs may be allocated to the station, or at least one discrete RU and at least one contiguous RU may be allocated to the station.

502: The access point sends the resource scheduling information.

Correspondingly, the station receives the scheduling information.

Optionally, the resource unit scheduling information may be carried in a signal field of a physical layer protocol data unit (PHY protocol data unit, PPDU). The signaling includes a resource unit allocation subfield and a user field. The resource unit allocation subfield indicates resource unit allocation information of one or more RUs. The user field includes station information of the station to which the one or more RUs are allocated.

Optionally, the resource unit scheduling information may also be carried in a user field of the trigger frame.

503: The station determines, based on the resource unit scheduling information, the one or more RUs allocated to the station.

The station determines a resource unit allocation status based on the resource scheduling information. Specifically, the station can determine, based on the station information of the station and the resource unit allocation information of the station, a quantity of subcarriers included in the one or more RUs allocated to the station, and locations of the one or more RUs in the bandwidth.

When an RU (a discrete RU or a contiguous RU) of a quantity of subcarriers is located at a location in the bandwidth, a tone plan of the RU in the bandwidth is specified in a standard. In this way, the station can determine, based on the quantity of subcarriers of the one or more RUs allocated to the station and the locations of the one or more RUs allocated to the station in the bandwidth, locations of the subcarriers of the one or more RUs allocated to the station in the bandwidth.

In this way, in this application, discrete RUs can be allocated to a station, that is, a plurality of subcarriers or a plurality of subcarrier groups that are discrete in frequency domain can be allocated to one station, so that a frequency domain resource allocated to the station is more flexible, and is not limited to one or two contiguous frequency domain resources. Therefore, frequency domain resources can be more fully and flexibly used, frequency diversity of RUs allocated to a single user is improved, and subcarriers of a single RU covers a wider frequency range, thereby improving transmission reliability.

It should be understood that the foregoing resource scheduling method is described by using an embodiment in which the AP sends the resource scheduling information to the STA. The method is also applicable to a scenario in which an AP sends resource scheduling information to an AP and a scenario in which a STA sends resource scheduling information to a STA.

Optionally, a discrete RU includes N subcarriers. A quantity of MHz occupied by the discrete RU is greater than a quantity of MHz occupied by a contiguous RU with N subcarriers. A minimum granularity of quantity of MHz is 1.

The quantity of MHz occupied by the discrete RU is a quantity of MHz occupied by N subcarriers of the discrete RU. The bandwidth includes a plurality of MHz, and at least one subcarrier of a discrete RU is distributed on one MHz. Even if the subcarriers of the discrete RU do not occupy the entire MHz, the one MHz is counted into a quantity of MHz occupied by the discrete RU.

For example, 26 subcarriers of a discrete 26-tone RU include four subcarrier groups. In ascending order of frequencies, the 1^{st} to 7^{th} subcarriers are contiguous, and the 1^{st} to 7^{th} subcarriers are one subcarrier group; the 8^{th} to 14^{th} subcarriers are contiguous, and the 8^{th} to 14^{th} subcarriers are one subcarrier group; the 15^{th} to 20^{th} subcarriers are contiguous, and the 15^{th} to 20^{th} subcarriers are one subcarrier group; the 21^{st} to 26^{th} subcarriers are contiguous, and the 21^{st} to 26^{th} subcarriers are one subcarrier group.

In 1 MHz occupied by the 1^{st} to the 7^{th} subcarriers, only these 7 subcarriers are subcarriers of the discrete 26-tone RU. Even if a frequency corresponding to the 1st to the 7th subcarriers is only 0.5 MHz, that is, the 1^{st} to the 7^{th} subcarriers do not fully occupy the 1 MHz, because the minimum granularity of quantity of MHz is 1, a quantity of MHz occupied by the 1^{st} to the 7^{th} subcarriers is still 1 MHz.

Similarly, in 1 MHz occupied by the 8^{th} to the 14^{th} subcarriers, only these seven subcarriers are subcarriers of the discrete 26-tone RU, and a quantity of MHz occupied by the 8^{th} to the 14^{th} subcarriers is also 1 MHz. In 1 MHz occupied by the 15^{th} to 20^{th} subcarriers, only these seven subcarriers are subcarriers of the discrete 26-tone RU, and a quantity of MHz occupied by the 15^{th} to 20^{th} subcarriers is also 1 MHz. In 1 MHz occupied by the 21^{st} to 26^{th} subcarriers, only these seven subcarriers are subcarriers of the discrete 26-tone RU, and a quantity of MHz occupied by the 21^{st} to 26^{th} subcarriers is also 1 MHz.

In this way, the discrete 26-tone RU occupies 4 MHz.

In an indoor low power consumption (Low Power Indoor, LPI) communication scenario, a maximum transmit power and a maximum power spectrum density are limited. Compared with the maximum power, the maximum power spectrum density is more strictly limited, and an allowed maximum transmit power is usually more limited by the power spectrum density. Due to limitation of the maximum power spectrum density, a transmit power of a single contiguous RU is limited.

The maximum power spectrum density refers to a maximum transmit power for 1 MHz. A minimum granularity of the maximum power spectrum density is 1 MHz. When the transmit power of 1 MHz is not changed, for a discrete RU and a contiguous RU that include a same quantity of subcarriers, a quantity of MHz occupied by the discrete RU is greater than a quantity of MHz occupied by the contiguous RU. In this way, when the maximum power spectrum density is the same, the total transmit power of the discrete RU is higher than the total transmit power of the contiguous RU.

Therefore, compared with the contiguous RU, when data is transmitted by using the discrete RU, a transmit power of a single RU can be increased, thereby increasing a transmit power on a single subcarrier, and improving an equivalent signal-to-noise ratio (signal to noise ratio, SNR).

A resource unit allocated to a station includes at least one discrete RU, and the station may perform uplink transmission by using the at least one discrete RU. When the station performs uplink transmission by using a discrete RU, a total transmit power of the discrete RU may be greater than a total transmit power of a contiguous RU with a same size as the discrete RU, so that a transmit power of a single RU can be increased without increasing maximum power spectrum density. The contiguous RU with the same size as the discrete RU may be understood as a contiguous RU with a same quantity of subcarriers as the discrete RU.

In this embodiment of this application, at least one discrete RU allocated to a station includes a pilot subcarrier. In this way, the station can estimate a phase according to the pilot subcarrier, and perform phase correction.

The following provides some tone plans of the discrete RU.

In some possible implementations, in a plurality of discrete subcarrier groups included in one discrete RU, there are a same quantity of subcarriers between every two adjacent subcarrier groups, and each subcarrier group includes one subcarrier. Two adjacent subcarrier groups refer to two adjacent subcarrier groups of a discrete RU. In other words, in a plurality of subcarriers included in one discrete RU, a same quantity of subcarriers are used as a spacing between every two adjacent subcarriers, and the every two adjacent subcarriers are two adjacent subcarriers of one discrete RU.

The quantity of subcarriers between two adjacent subcarriers may be, for example, one subcarrier, two subcarriers, or three subcarriers. In this embodiment of this application, a quantity of subcarriers between every two adjacent subcarrier groups is a quantity of subcarriers that are between every two adjacent subcarrier groups and that belong to another RU. Subcarriers between every two adjacent subcarrier groups may not include a guard subcarrier, a null subcarrier, or a direct current subcarrier in a contiguous RU scenario, and a quantity of subcarriers between every two adjacent subcarrier groups does not include a quantity of a guard subcarrier, a null subcarrier, or a direct current subcarrier between every two adjacent subcarrier groups. Alternatively, subcarriers between every two adjacent subcarrier groups may include a guard subcarrier, a null subcarrier, and a direct current subcarrier in a contiguous RU scenario, and a quantity of subcarriers between every two adjacent subcarrier groups may include a quantity of a guard subcarrier, a null subcarrier, and a direct current subcarrier between every two adjacent subcarrier groups

The contiguous RU scenario may be understood as a scenario in which a frequency domain resource is divided into one or more contiguous RUs, for example, scenarios in which RUs are divided in manners shown in FIG. 4A to FIG. 4C.

Optionally, one discrete RU includes at least one pilot subcarrier. A location, in a bandwidth, of a pilot subcarrier in a discrete RU may be different from a location, in the same bandwidth, of a pilot subcarrier in a contiguous RU. For example, as shown in Table 1, when the bandwidth is 20 MHz, pilot subcarriers of the contiguous RU may be at least one of the subcarrier-116, the subcarrier-102, the subcarrier-90, the subcarrier-76, the subcarrier -62, the subcarrier -48, the subcarrier -36, the subcarrier -22, the subcarrier -10, the subcarrier 10, the subcarrier 22, the subcarrier 36, the subcarrier 48, the subcarrier 62, the subcarrier 76, and the subcarrier 90. When the bandwidth is 20 MHz, pilot subcarriers of the discrete RU are not necessarily pilot subcarriers in these locations.

In an implementation, each of the plurality of subcarrier groups of the discrete RU includes one subcarrier. In this case, the discrete RU may also be described as including a plurality of subcarriers that are discrete in frequency domain.

For example, one discrete RU includes a plurality of subcarriers that are discrete in frequency domain, and a quantity of subcarriers between every two adj acent subcarrier groups is 3. That is, in N subcarriers of the discrete RU, there are three subcarriers between every two adjacent subcarriers. In this way, for the discrete RU and a contiguous RU that include the same quantity of subcarriers, a quantity of megahertz occupied by the discrete RU is four times a quantity of megahertz occupied by the contiguous RU, so that a transmit power of the discrete RU can be greater than a transmit power of the contiguous RU.

For example, for a discrete 26-tone RU, there are three subcarriers between every two adjacent subcarriers of 26 subcarriers. In this way, a quantity of megahertz occupied by a discrete 26-tone RU is 8 megahertz. A quantity of megahertz occupied by a contiguous 26-tone RU is 2 megahertz. In this way, the quantity of megahertz occupied by the discrete 26-tone RU is greater than the quantity of megahertz occupied by the contiguous 26-tone RU, so that a transmit power of the discrete 26-tone RU is greater than a transmit power of the contiguous 26-tone RU.

It should be understood that a spacing subcarrier may not be allocated to any station, or may belong to a subcarrier of a discrete RU allocated to another station.

In another example, in a plurality of subcarrier groups of a discrete RU, each subcarrier group includes one subcarrier, and a quantity of subcarriers between every two adj acent subcarrier groups is 1. That is, in N subcarriers of the discrete RU, there is one subcarrier between every two adjacent subcarriers. In this way, for the discrete RU and a contiguous RU that include the same quantity of subcarriers, a quantity of megahertz occupied by the discrete RU is twice a quantity of megahertz occupied by the contiguous RU, so that a transmit power of the discrete RU can be greater than a transmit power of the contiguous RU.

For example, there is one subcarrier between every two adjacent subcarriers in 26 subcarriers of a discrete 26-tone RU. In this way, a quantity of megahertz occupied by a discrete 26-tone RU is 4 megahertz. However, a quantity of megahertz occupied by a contiguous 26-tone RU is only 2 megahertz. In this way, the quantity of megahertz occupied by the discrete 26-tone RU is greater than the quantity of megahertz occupied by the contiguous 26-tone RU, so that a transmit power of the discrete 26-tone RU is greater than a transmit power of the contiguous 26-tone RU.

In some optional embodiments, a location of a pilot subcarrier in the discrete resource unit is the same as a location of the pilot subcarrier used as a pilot subcarrier in a contiguous resource unit. Herein, that the locations are the same means that locations of the pilot subcarriers in an entire bandwidth are the same. In this way, an extremely high throughput short training field (extremely high throughput short training field, EHT-STF) and an EHT long training field (extremely high throughput long training field, EHT-LTF) in the PPDU can remain unchanged, so as to implement hybrid transmission of a discrete RU and a contiguous RU.

The following specifically provides some tone plans of a discrete RU when a location of a pilot subcarrier in the discrete resource unit is the same as a location of the pilot subcarrier used as a pilot subcarrier in a contiguous resource unit.

In a possible implementation, one discrete RU includes a plurality of sub-RUs, and each sub-RU includes a plurality of subcarrier groups. One subcarrier group includes one subcarrier. A spacing between every two adjacent subcarriers of one sub-RU is the same. One discrete RU includes at least one pilot subcarrier. A location of a pilot subcarrier in a discrete RU is the same as a location of a pilot subcarrier in a contiguous RU.

For example, the discrete RU includes two sub-RUs. In the two sub-RUs, an index of a subcarrier in one of the sub-RUs is an odd number, and an index of a subcarrier in the other sub-RU is an even number. A frequency of any subcarrier of one of the two sub-RUs is higher than a frequency of any subcarrier of the other sub-RU. One discrete RU includes at least one pilot subcarrier. A location of a pilot subcarrier in the discrete RU is the same as a location of a pilot subcarrier in a contiguous RU in a bandwidth. In this way, on a premise that the location of the pilot subcarrier of the discrete RU is the same as the location of the pilot subcarrier of the contiguous RU, it is ensured that each discrete RU has a pilot subcarrier, so that an EHT-STF/EHT-LTF in a PPDU can remain unchanged, hybrid transmission of the discrete RU and a contiguous RU can be implemented, and a station can better perform phase correction.

In some examples, the bandwidth is 20 MHz. The 20 MHz may include a combination of one or a plurality of the following: a discrete 26-tone RU, a discrete 52-tone RU, a discrete 106-tone RU, and a discrete 242-tone RU. The 20 MHz includes 256 subcarriers whose index values are -128, ..., 0, ..., 127. When the bandwidth is 20 MHz, resource unit allocation information may indicate a quantity of subcarriers of the discrete RU and locations of the subcarriers in the bandwidth according to Table 3.

In the following tables of this application, [a:m:b]&[c:m:d] indicates a discrete sequence {a, a+m, ..., b-m, b} and a discrete sequence {c, c+m, ..., d-m, d}. The discrete sequence {a, a+m, ..., b-m, b} includes a subcarrier a, a subcarrier a+m, ..., a subcarrier b-m, and a subcarrier b; and a discrete sequence of {c, c+m, ..., d-m, d} includes a subcarrier c, a subcarrier c+m, ..., a subcarrier d-m, and a subcarrier d.

**Table 3**

| RU type | DRU index, subcarrier range, and location of pilot subcarrier | | | | |
|---|---|---|---|---|---|
| Discrete 26-tone | DRU 1 | DRU 2 | DRU 3 | DRU 4 | DRU 5 |
| RU | [-121:2:-93]& [-94:2:-70] | [-120:2:-96]& [-95:2:-71] | [-68: 2:-44]& [-43:-2:-17] | [-67:2:-43] | [-16: -4, 4: 16] |
| 2 pilots | | | | &[-42:2:-18] | {-10, 10} |
| | {-90, -76} | {-116, -102} | {-62, -48} | {-36, -22} | (Special contiguous RU) |
| | DRU 6 | DRU 7 | DRU 8 | DRU 9 | |
| | [17:2:41]& [44:2:68] | [18: 42]& [43:2:67] | [70:2:94] | [71:2:95] | |
| | | | [97: 121] | [96:2:120] | |
| | {48, 62} | {22, 36} | {76, 90} | {102, 116} | |
| Discrete 52-tone | DRU 1 | DRU 2 | DRU 3 | DRU 4 | |
| RU | [-121:2:-71]& [-68:2:-16] | [-120:2:-70]& [-69:2:-17] | [17:2:67]& [70:2:120] | [18: 68]& [71:2:121] | |
| 4 pilot | | | | | |
| | {-62, -48, -36, -22} | {-116, -102,-90,-76} | {76, 90, 102, 116} | {22, 36, 48, 62} | |
| Discrete 106-tone RU | DRU 1 | | DRU 2 | | |
| | [-122:2:-18]& [17:2:121] | | [-121: 2:-17]& [18: 2:122] | | |
| 4 pilots | | | | | |
| | {-116,-90,-48,-22} | | {22,48, 90, 116} | | |
| Discrete 242-tone RU | DRU 1 | | | | |
| | [-122: -2, 2:122] | | | | |
| 8 pilots | {-116, -90, -48, -22, 22, 48, 90, 116} (Special contiguous RU) | | | | |

Each discrete RU in Table 3 includes two sub-RUs. In the two sub-RUs, an index of a subcarrier in one of the RUs is an odd number, and an index of a subcarrier in the other RU is an even number. A frequency of any subcarrier of one sub-RU is higher than a frequency of any subcarrier of the other sub-RU. Each discrete RU includes one pilot subcarrier, and locations of pilot subcarriers in Table 3 are the same as those of pilot subcarriers in a contiguous RU scenario (for example, pilot subcarriers of contiguous RUs in Table 1).

In the example shown in Table 3, the discrete 26-tone RU includes two sub-RUs. In a plurality of subcarriers of one sub-RU, there is a spacing of one subcarrier between every two adjacent subcarriers, or in other words, a difference between subcarrier indexes of every two adjacent subcarriers is 2.

For example, in 20 MHz, a discrete 26-tone RU allocated to a station may be one of a DRU 1 to a DRU 4 and a DRU 6 to a DRU 9 in a row of the 26-tone RU in Table 3. A DRU 5 includes two contiguous subcarrier groups (a subcarrier -16 to a subcarrier -4, and a subcarrier 4 to a subcarrier 16). Therefore, the DRU 5 is actually a contiguous RU.

Specifically, a discrete 26-tone RU corresponding to the DRU 1 in the row of 26-tone RU in Table 3 includes: a subcarrier -121, a subcarrier -119, a subcarrier -117, ..., a subcarrier -99, a subcarrier -97, a subcarrier-95, a subcarrier -94, a subcarrier -92, a subcarrier -90, ..., a subcarrier -74, a subcarrier -72, and a subcarrier -70. In other words, one sub-RU of the discrete 26-tone RU includes the subcarrier -121, the subcarrier -119, the subcarrier -117, ..., the subcarrier -99, the subcarrier -97, and the subcarrier -95. The other sub-RU of the discrete 26-tone RU includes the subcarrier -94, the subcarrier -92, the subcarrier -90, ..., the subcarrier -74, the subcarrier -72, and the subcarrier -70. The subcarrier -90 and the subcarrier -76 are pilot subcarriers.

A discrete 26-tone RU corresponding to the DRU 2 in the row of 26-tone RU in Table 3 includes: a subcarrier -120, a subcarrier -118, a subcarrier -116, , a subcarrier -98, a subcarrier -96, a subcarrier -95, a subcarrier -93, a subcarrier -91, ..., a subcarrier -75, a subcarrier -73, and a subcarrier -71. In other words, one sub-RU of the discrete 26-tone RU includes the subcarrier -120, the subcarrier -118, the subcarrier -116, ..., the subcarrier -98, and the subcarrier -96. The other sub-RU of the discrete 26-tone RU includes the subcarrier -95, the subcarrier -93, the subcarrier -91, ..., the subcarrier -75, the subcarrier -73, and the subcarrier -71. The subcarrier -116 and the subcarrier -102 are pilot subcarriers.

It can be learned that, in the row of 26-tone RU, a spacing subcarrier between subcarriers of the DRU 1 is a subcarrier of the DRU 2, and a spacing subcarrier between subcarriers of the DRU 2 is a subcarrier of the DRU 2. In this way, the DRU 1 and the DRU 2 can be regarded as a discrete RU group.

Optionally, subcarriers between a plurality of subcarriers of one discrete RU may also be used as subcarriers of one or more other discrete RUs. A discrete RU may appear in a form of a discrete RU group in a bandwidth. In this way, a frequency domain resource can be fully utilized, and subcarriers between subcarriers of a discrete RU can be fully utilized. One discrete RU group includes a plurality of discrete RUs. A spacing subcarrier between a plurality of subcarriers of any discrete RU in the discrete RU group is a subcarrier of at least one other discrete RU in the discrete RU group.

For subcarrier ranges of discrete 26-tone RUs corresponding to the DRU 3 and the DRU 4 and the DRU 6 to the DRU 9 in the row of 26-tone RU in Table 3, refer to Table 3. Details are not described herein again. The DRU 3 and the DRU 4 form a discrete RU group. The DRU 6 and the DRU 7 form a discrete RU group. The DRU 8 and DRU 9 form a discrete RU group.

In Table 3, one of two sub-RUs of a discrete RU may not include a pilot subcarrier. When performing phase estimation, a station may combine pilot subcarriers of all discrete RUs that can be used by the station to jointly perform phase correction.

When the bandwidth is 20 MHz, a discrete 52-tone RU allocated to one station may be one of the DRU 1 to DRU 4 in the row of 52-tone RU in Table 3. Specifically, a discrete 52-tone RU corresponding to the DRU 1 in the row of 52-tone RU in Table 3 includes: a subcarrier -121, a subcarrier -119, a subcarrier -117, ..., a subcarrier - 67, a subcarrier -69, a subcarrier -71, a subcarrier -68, a subcarrier -70, a subcarrier -72, , a subcarrier -20, a subcarrier -18, and a subcarrier -16. In other words, one sub-RU of the discrete 52-tone RU includes the subcarrier - 121, the subcarrier -119, the subcarrier -117, ..., the subcarrier -67, the subcarrier -69, and the subcarrier -71. The other sub-RU of the discrete 52-tone RU includes the subcarrier -68, the subcarrier -70, the subcarrier -72, ..., the subcarrier -20, the subcarrier -18, and the subcarrier -16. The subcarrier -62, the subcarrier -48, the subcarrier -32, and the subcarrier -22 are pilot subcarriers.

A discrete 52-tone RU corresponding to the DRU 2 in the row of 52-tone RU in Table 3 includes: a subcarrier -120, a subcarrier -118, a subcarrier -116, , a subcarrier -74, a subcarrier -72, a subcarrier -70, a subcarrier -69, a subcarrier -67, a subcarrier-65, ..., a subcarrier -21, a subcarrier -19, and a subcarrier -17. In other words, one sub-RU of the discrete 52-tone RU includes the subcarrier -120, the subcarrier -118, the subcarrier - 116, ..., the subcarrier -74, the subcarrier -72, and the subcarrier -70. The other sub-RU of the discrete 52-tone RU includes the subcarrier -69, the subcarrier -67, the subcarrier -65, ..., the subcarrier -21, the subcarrier -19, and the subcarrier-17. The subcarrier-116, the subcarrier-102, the subcarrier-90, and the subcarrier-76 are pilot subcarriers.

It can be learned that spacing subcarriers between subcarriers of the DRU 1 in the row of 52-tone RU are subcarriers of the DRU 2, and the DRU 1 and the DRU 2 may be understood as a discrete RU group.

For subcarrier ranges of discrete 52-tone RUs corresponding to the DRU 3 and the DRU 4 in the row of 52-tone RU in Table 3, refer to Table 3. Details are not described herein again. The DRU 3 and the DRU 4 may be considered as a discrete RU group.

When the bandwidth is 20 MHz, a discrete 106-tone RU allocated to a station may be a DRU 1 or a DRU 2 in a row of 106-tone RU in Table 3. The DRU 1 and the DRU 2 can be regarded as a discrete RU group.

A discrete 106-tone RU corresponding to the DRU 1 in the row of 106-tone RU in Table 3 includes: a subcarrier -122, a subcarrier -120, a subcarrier -118, , a subcarrier -22, a subcarrier -20, a subcarrier -18, a subcarrier 17, a subcarrier 19, a subcarrier 21, ..., a subcarrier 117, a subcarrier 119, and a subcarrier 121. In other words, one sub-RU of the discrete 106-tone RU includes the subcarrier -122, the subcarrier -120, the subcarrier - 118, ..., the subcarrier -22, the subcarrier -20, and the subcarrier -18. The other sub-RU of the discrete 106-tone RU includes the subcarrier 17, the subcarrier 19, the subcarrier 21, ..., the subcarrier 117, the subcarrier 119, and the subcarrier 121. The subcarrier -116, the subcarrier -90, the subcarrier -48, and the subcarrier -22 are pilot subcarriers.

A discrete 106-tone RU corresponding to the DRU 1 in the row of 106-tone RU in Table 3 includes: a subcarrier -121, a subcarrier -119, a subcarrier -117, , a subcarrier -21, a subcarrier -19, a subcarrier -17, a subcarrier 18, a subcarrier 20, a subcarrier 22, ..., a subcarrier 118, a subcarrier 120, and a subcarrier 122. In other words, one sub-RU of the discrete 106-tone RU includes the subcarrier -121, the subcarrier -119, the subcarrier - 117, ..., the subcarrier -21, the subcarrier -19, and the subcarrier -17. The other sub-RU of the discrete 106-tone RU includes the subcarrier 18, the subcarrier 20, the subcarrier 22, ..., the subcarrier 118, the subcarrier 120, and the subcarrier 122. The subcarrier-22, the subcarrier-48, the subcarrier-90, and the subcarrier-116 are pilot subcarriers.

It should be understood that a subcarrier range of each DRU in Table 3 in this application is merely used as an example for description, and the subcarrier range of each DRU is not limited in this application. The foregoing discrete RU group is related to a subcarrier range of each DRU. When a subcarrier range of the DRU changes, a DRU that is in a discrete RU group with the DRU also changes. This application is not limited to that a discrete RU group in a bandwidth is the foregoing example group.

For example, in another example, a subcarrier range of the DRU 1 in the row of 26-tone RU may also be odd-numbered subcarriers between the subcarrier -121 and the subcarrier -93 and even-numbered subcarriers between the subcarrier 18 and the subcarrier 42, and a subcarrier range of the DRU 6 in the row of 26-tone RU may be odd-numbered subcarriers between the subcarrier 17 and the subcarrier 41 and even-numbered subcarriers between the subcarrier -120 and the subcarrier -96. In this way, the DRU 1 and the DRU 6 form a discrete RU group.

Similarly, a combination of a discrete RU group corresponding to a discrete RU whose quantity of subcarriers is greater than 26 is not fixed either.

In this application, an odd-numbered subcarrier is a subcarrier whose index is an odd number, and an even-numbered subcarrier is a subcarrier whose index is an even number. Odd-numbered subcarriers between the subcarriers A and B include odd-numbered subcarriers whose indexes are greater than or equal to A and less than or equal to B. Even-numbered subcarriers between subcarriers X and Y include even-numbered subcarriers whose indexes are greater than or equal to X and less than or equal to Y

Subcarriers of a DRU 1 in the row of 242-tone RU in Table 3 include a subcarrier -122, a subcarrier - 121, a subcarrier -120, ..., a subcarrier -4, a subcarrier -3, a subcarrier -2, a subcarrier 2, a subcarrier 3, a subcarrier 4, ..., a subcarrier 120, a subcarrier 121, and a subcarrier 122. In other words, one sub-RU of the discrete 242-tone RU includes the subcarrier -122, the subcarrier -121, the subcarrier -120, ..., the subcarrier -4, the subcarrier -3, and the subcarrier -2. The other sub-RU of the discrete 242-tone RU includes the subcarrier 2, the subcarrier 3, the subcarrier 4, ..., the subcarrier 120, the subcarrier 121, and the subcarrier 122. The subcarrier -116, the subcarrier -90, the subcarrier -48, the subcarrier -22, the subcarrier 22, the subcarrier 48, the subcarrier 90, and the subcarrier 116 are pilot subcarriers. It can be learned that the DRU 1 includes two subcarrier groups, and each subcarrier group includes 121 contiguous subcarriers. The DRU 1 in the row of 242-tone RU is a special contiguous RU rather than a discrete RU.

In some other examples, the bandwidth is greater than or equal to 40 MHz, the discrete RU is distributed in a frequency range greater than or equal to 40 MHz, and each sub-RU of the discrete RU may be located on different 20 MHz.

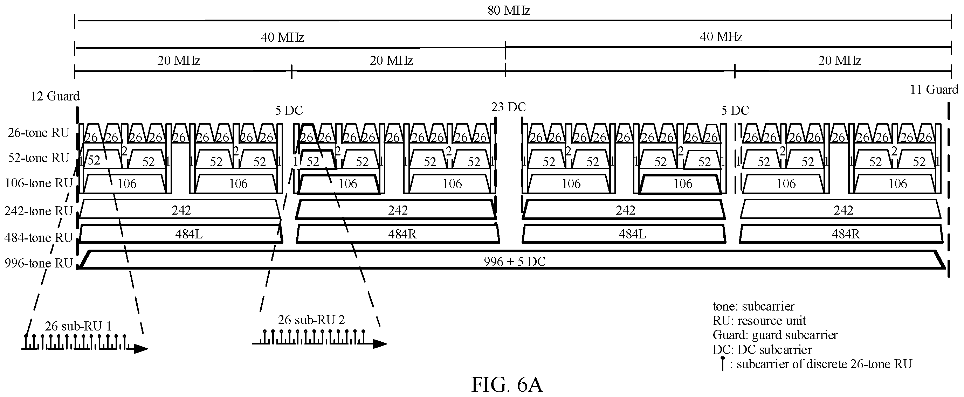

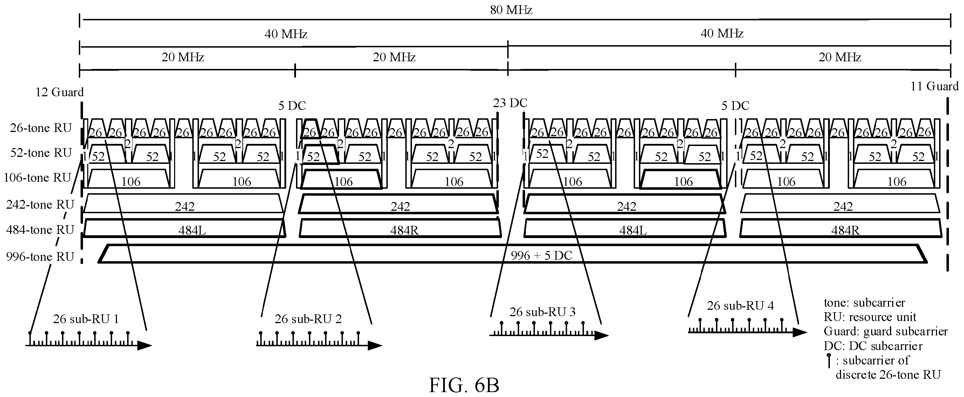

In some specific examples, the discrete 26-tone RU on the bandwidth may include two sub-RUs, and each sub-RU includes 13 subcarriers. Each sub-RU is located on different 20 MHz. A quantity of subcarriers between every two adjacent subcarriers in each sub-RU is one subcarrier, two subcarriers, three subcarriers, or the like. For example, in a schematic diagram of resource unit allocation shown in FIG. 6A, a bandwidth is 80 MHz, two sub-RUs (for example, a 26 sub-RU 1 and a 26 sub-RU 2 in FIG. 6A) of a discrete 26-tone RU are respectively located on a first 20 MHz and a second 20 MHz, and a quantity of subcarriers between two adjacent subcarriers in each sub-RU is one subcarrier. In a schematic diagram of resource unit allocation shown in FIG. 6B, a bandwidth is 80 MHz, four sub-RUs (for example, a 26 sub-RU 1, a 26 sub-RU 2, a 26 sub-RU 3, and a 26 sub-RU 4 in FIG. 6B) of a discrete 26-tone RU are respectively located on a first 20 MHz, a second 20 MHz, a third 20 MHz, and a fourth 20 MHz, and a quantity of subcarriers between two adjacent subcarriers in each sub-RU of the discrete RU is three.

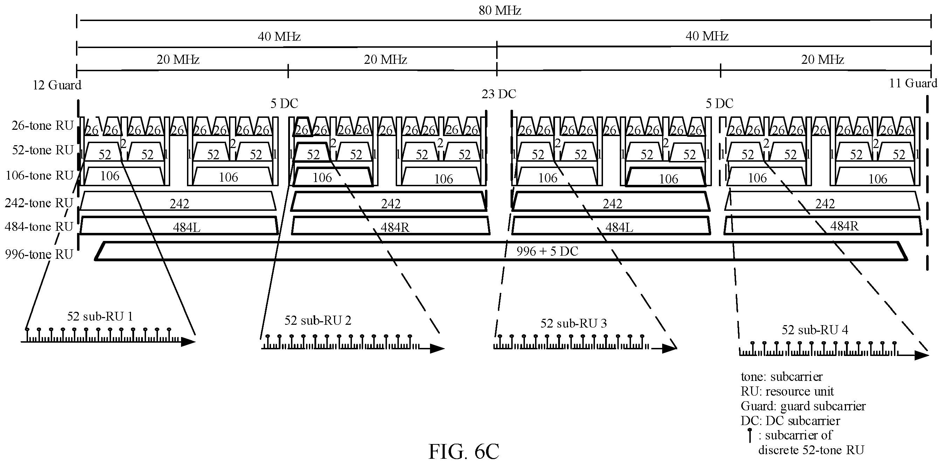

In some other specific examples, a bandwidth is greater than or equal to 80 MHz. In ascending order of frequencies, one 80 MHz in the bandwidth includes four 20 MHz. The discrete 52-tone RU within 80 MHz includes four sub-RUs, and each sub-RU includes 13 subcarriers. Each sub-RU is located on different 20 MHz. In other words, the four sub-RUs of the discrete 52-tone RU are distributed on four 20 MHz. A quantity of subcarriers between every two adjacent subcarriers in each sub-RU is one subcarrier, two subcarriers, three subcarriers, or the like. For example, in a schematic diagram of resource unit allocation shown in FIG. 6C, a bandwidth is 80 MHz, and four sub-RUs (a 52 sub-RU 1, a 52 sub-RU 2, a 52 sub-RU 3, and a 52 sub-RU 4 shown in FIG. 6C) of a discrete 52-tone RU are respectively located on four 20 MHz. A quantity of subcarriers between every two adjacent subcarriers in each sub-RU of the discrete 52-tone RU is three subcarriers.

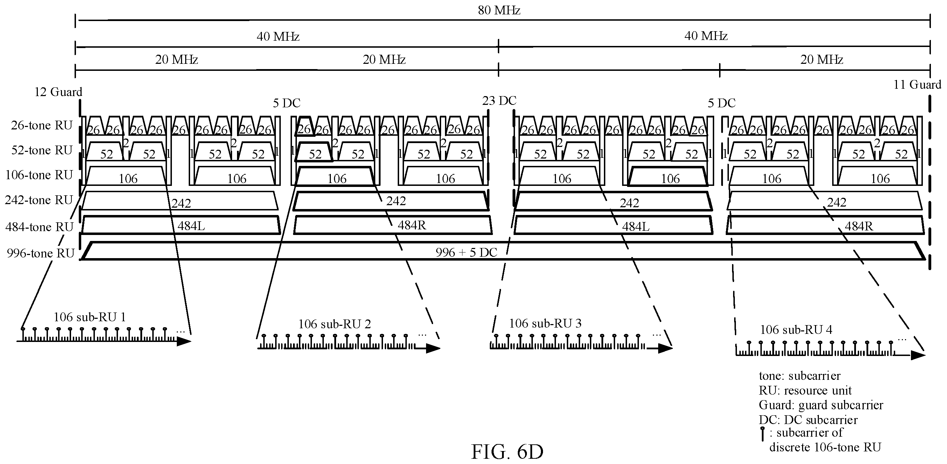

In some other specific examples, a bandwidth is greater than or equal to 80 MHz. In ascending order of frequencies, one 80 MHz in the bandwidth includes four 20 MHz. The discrete 106-tone RU within 80 MHz includes four sub-RUs, two of the sub-RUs each include 27 subcarriers, and the other two sub-RUs each include 26 subcarriers. Each sub-RU is located on different 20 MHz. In other words, the four sub-RUs of the discrete 56-tone RU are distributed on four 20 MHz. A quantity of subcarriers between every two adjacent subcarriers in each sub-RU is one subcarrier, two subcarriers, three subcarriers, or the like. For example, in a schematic diagram of resource unit allocation shown in FIG. 6D, a bandwidth is 80 MHz, four sub-RUs (for example, a 106 sub-RU 1, a 106 sub-RU 2, a 106 sub-RU 3, and a 106 sub-RU 4 in FIG. 6D) of a discrete 106-tone RU are respectively located on a first 20 MHz, a second 20 MHz, a third 20 MHz, and a fourth 20 MHz, a quantity of subcarriers between every two adjacent subcarriers in each sub-RU of the discrete 106-tone RU is three subcarriers.

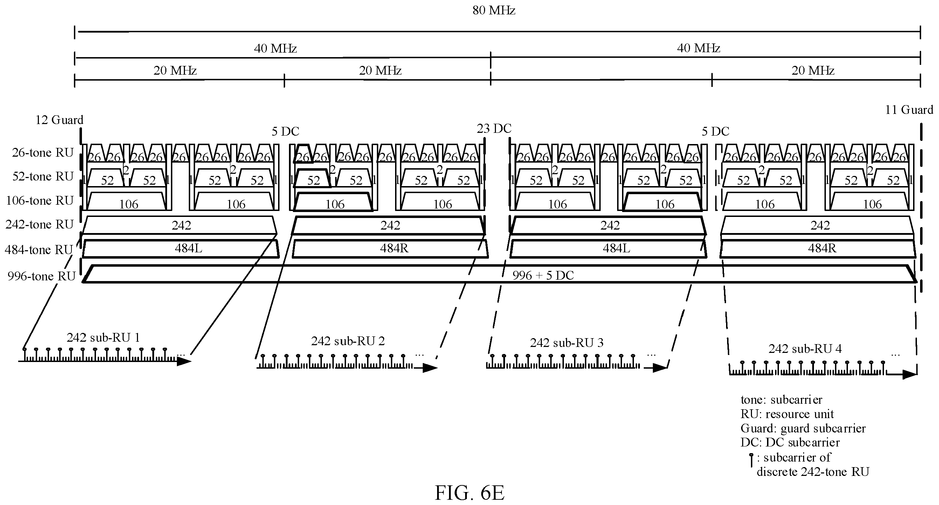

In some other specific examples, the bandwidth is greater than or equal to 80 MHz. One 80 MHz in the bandwidth includes at least four 20 MHz in ascending order of frequencies. A discrete 242-tone RU in the 80 MHz includes four sub-RUs, two sub-RUs each include 61 subcarriers, and the other two sub-RUs each include 60 subcarriers. Each sub-RU is located on different 20 MHz. In other words, the four sub-RUs of the discrete 56-tone RU are distributed on four 20 MHz. A quantity of subcarriers between every two adjacent subcarriers in each sub-RU is one subcarrier, two subcarriers, three subcarriers, or the like. For example, in a schematic diagram of resource unit allocation shown in FIG. 6E, a bandwidth is 80 MHz, four sub-RUs (for example, a 242 sub-RU 1, a 242 sub-RU 2, a 242 sub-RU 3, and a 242 sub-RU 4 in FIG. 6E) of a discrete 242-tone RU are respectively located on a first 20 MHz, a second 20 MHz, a third 20 MHz, and a fourth 20 MHz, a quantity of subcarriers between every two adjacent subcarriers in each sub-RU of the discrete 242-tone RU is three subcarriers.

A discrete RU whose quantity of subcarriers is greater than 242 may also include a plurality of sub-RUs, each of the plurality of sub-RUs is distributed in different 20 MHz, and subcarriers in each sub-RU are discrete or noncontiguous. Details are not listed one by one in this embodiment of this application.

In this application, a quantity of sub-RUs included in each discrete RU is not limited to the quantity in the foregoing example.

In still some possible implementations, one discrete RU includes a plurality of sub-RUs, each sub-RU includes two subcarrier subgroups, and each subcarrier subgroup includes a plurality of subcarriers. In two subcarrier subgroups included in one sub-RU, an index of a subcarrier in one subcarrier subgroup is an odd number, and an index of a subcarrier in the other subcarrier subgroup is an even number. It may be understood that in a plurality of subcarriers in one subcarrier subgroup, there is one subcarrier between every two adjacent subcarriers. Each of the plurality of sub-RUs includes at least one pilot subcarrier. In this way, pilot subcarriers are evenly distributed, thereby improving accuracy of phase correction.

For example, when the bandwidth is 20 MHz, resource unit allocation information indicates a quantity of subcarriers of the discrete RU and locations of the subcarriers in the bandwidth according to Table 4.

**Table 4**

| RU type | DRU index, subcarrier range, and location of pilot subcarrier | | | | |
|---|---|---|---|---|---|
| 26-tone RU | DRU 1 | DRU 2 | DRU 3 | DRU 4 | DRU 5 |
| 2 pilots | [-121:2:-109] &[-106:2:-96] &[-95:2:-83] &[-80:2:-70] | [-120:2:-108] &[-107:2:-97] &[-94:2:-84] &[-81:2:-71] | [-68: 2:-56] &[-53:2:-43] &[-42:2:-30] &[-27:2:-17] | [-67:2:-55] &[-54:2:-44] &[-43:2:-31] &[-28:2:-18] | [-16: -4, 4: 16] |
| | | | | | {-10, 10} (Special contiguous RU) |
| | {-102, -76} | {-116, -90} | {-62,-36} | {-48,-22} | |
| | DRU 6 | DRU 7 | DRU 8 | DRU 9 | |
| | [17:2:29]&[32: 2:42]&[43:2:55 ]&[58:2:68] | [18:2:30] &[31:2:41]& [42:2:54]&[57: 2:67] | [70:2:82]&[85: 2:95]&[96:2:10 8]&[111:2:121] | [71:2:83]&[84: 2:94]&[97:2:10 9]&[110:2:120] | |
| | {36, 62} | | {76, 102} | {90, 116} | |
| | | {22, 48} | | | |
| 52-tone RU | DRU 1 | DRU 2 | DRU 3 | DRU 4 | |
| 4 pilots | [-121:2:-95]&[-92:2:-70]&[-67:2:-41]&[-40:2:-18] | [-120:2:-94]&[-93:2:-71]&[-68:2:-42]&[-39:2:-17]& | [17:2:43] &[46:2:68] &[71:2:97] &[98:2:120] | [18:2:44] &[45:2:67] &[70:2:96] &[99:2:121] | |
| | | | 122, 36, 102, 116} | {48, 62, 76, 90,} | |
| | {-90, -76, -36, -22} | {-116, -102,-62, 48} | | | |
| 106-tone RU | RU 1 | | RU 2 | | |
| 4 pilots | [-122:2:-68]& [-67:2:-17]& [17:2:69]& [72:2:122] | | [-121:2:-69]& [-66:2:-18]& [18:2:70]& [71:2:121] | | |
| | {-116, -90, 90, 116} | | {-48, -22, 22, 48} | | |
| 242-tone RU | DRU 1 | | | | |
| 8 pilots | [-122: -2, 2:122] | | | | |
| | {-116, -90, -48,-22, 22, 48, 90, 116} (Special contiguous RU) | | | | |

In Table 4, a combination of at least two RUs that meet the condition of the discrete RU group may be understood as one RU group. Details are not described herein again.

When the bandwidth is 20 MHz, a 26-tone RU allocated to a station may be one of a DRU 1 to a DRU 4 and a DRU 6 to a DRU 9 in a row of 26-tone RU in Table 4.

When the bandwidth is 20 MHz, a discrete 26-tone RU corresponding to the DRU 1 in the row of 26-tone RU in Table 4 includes two sub-RUs. One sub-RU includes odd-numbered subcarriers between subcarriers -121 to -109 and even-numbered subcarriers between subcarriers -106 to -96, where a pilot subcarrier is the subcarrier - 102. The other sub-RU includes even-numbered subcarriers between a subcarrier -95 and a subcarrier -83 and odd-numbered subcarriers between a subcarrier -80 and a subcarrier -70, where the subcarrier -76 is a pilot subcarrier. In this way, each sub-RU of the discrete 26-tone RU includes at least one pilot subcarrier.

When the bandwidth is 20 MHz, refer to Table 4 for subcarrier ranges of discrete 26-tone RUs corresponding to the DRU 2 to the DRU 4 and the DRU 6 to the DRU 9 in the row of 26-tone RU and locations of pilot subcarriers. Details are not described herein again.

In 20 MHz, a 52-tone RU allocated to a station may be one or more of a DRU 1 to a DRU 4 in a row of 52-tone RU in Table 4.

When the bandwidth is 20 MHz, a discrete 52-tone RU corresponding to the DRU 1 in the row of 52-tone RU in Table 4 includes two sub-RUs. One sub-RU includes odd-numbered subcarriers between a subcarrier -121 and a subcarrier -95 and even-numbered subcarriers between a subcarrier -92 and a subcarrier 70, where the subcarrier -90 and the subcarrier -76 are pilot subcarriers. The other sub-RU includes odd-numbered subcarriers between a subcarrier -67 and a subcarrier -41 and even-numbered subcarriers between a subcarrier -40 and a subcarrier -18, where the subcarrier -36 and the subcarrier -22 are pilot subcarriers. In this way, each sub-RU of the discrete 52-tone RU includes at least one pilot subcarrier.

When the bandwidth is 20 MHz, for details of subcarrier ranges of discrete 52-tone RUs corresponding to the DRU 2 to the DRU 4 in the row of 52-tone RU in Table 4 and locations of pilot subcarriers, refer to Table 4. Details are not described herein again.

When the bandwidth is 20 MHz, a 106-tone RU allocated to a station may be an RU 1 or an RU 2 in a row of 106-tone RU in Table 4.

The RU 1 includes two sub-RUs, one of the two sub-RUs includes two subcarrier subgroups, one subcarrier subgroup includes even-numbered subcarriers between a subcarrier -122 and a subcarrier -68, and the other subcarrier subgroup includes odd-numbered subcarriers between a subcarrier -67 and a subcarrier -17. The subcarrier -116 and the subcarrier -90 in the one sub-RU are pilot subcarriers. Another sub-RU of the RU 1 includes two subcarrier subgroups, one subcarrier subgroup includes odd-numbered subcarriers between a subcarrier 17 and a subcarrier 69, and the other subcarrier subgroup includes even-numbered subcarriers between a subcarrier 72 and a subcarrier 122. The subcarrier 90 and the subcarrier 116 in the other sub-RU are pilot subcarriers. In this way, each sub-RU of the discrete 106-tone RU includes at least one pilot subcarrier.

Similarly, an RU 2 in a row of 106-tone RU in Table 4 includes two sub-RUs, one sub-RU includes two subcarrier subgroups, and each sub-RU includes two subcarrier subgroups. In the two subcarrier subgroups included in each sub-RU, an index of a subcarrier in one subcarrier subgroup is an odd number, and an index of a subcarrier in the other subcarrier subgroup is an even number. Each sub-RU includes at least one pilot subcarrier.

A 242-tone RU within 20 MHz is a contiguous RU. To be specific, in Table 4, a DRU 1 in a row of 242-tone RU is a contiguous RU.

In other possible implementations, one discrete RU includes a plurality of sub-RUs, each sub-RU includes two subcarrier subgroups, and each subcarrier subgroup includes a plurality of subcarriers. In two subcarrier subgroups included in one sub-RU, an index of a subcarrier in one subcarrier subgroup is an odd number, and an index of a subcarrier in the other subcarrier subgroup is an even number. A bandwidth is greater than or equal to 40 MHz, and each of the plurality of sub-RUs is located on different 20 MHz.

Specifically, when the bandwidth is greater than or equal to 40 MHz, a discrete RU may be distributed within 40 MHz. The 40 MHz includes 512 subcarriers. An index range of the 512 subcarriers is -256, -255, -254, ..., 0, ..., 253, 254, 255. A first 20 MHz of the 40 MHz includes a subcarrier -256, a subcarrier-255, a subcarrier-254, .. ., a subcarrier -3, a subcarrier -2, and a subcarrier -1. A second 20 MHz of the 40 MHz includes a subcarrier 0, a subcarrier 1, a subcarrier 2, ..., a subcarrier 253, a subcarrier 254, and a subcarrier 255.

Table 5 shows RU indexes of possible distributed discrete RUs, subcarrier ranges of the discrete RUs, and locations of pilot subcarriers when a bandwidth is 40 MHz. Resource unit allocation information may indicate a quantity of subcarriers of each discrete RU and locations of the subcarriers in the bandwidth according to Table 5.

**Table 5**

| RU type | RU index, subcarrier range, and location of pilot subcarrier | | | | |
|---|---|---|---|---|---|
| 26-tone RU | RU 1 | RU 2 | RU 3 | RU 4 | RU 5 |
| | [-243:2:-231] & [-228:2:-218] & [4:2:16]& [19:2:29] | [-217:2:-205] & [-202:2:-192] &[30:2:42] &[45:2:55] | [-189:2:-177] & [-174:2:-164] &[58:2:70] &[73:2:83] | [-163:2:-151] & [-148:2:-138] &[84:2:96] &[99:2:109] | [-136:2:-124] & [-121:2:-111] &[111:2:123]& [126:2:136] |
| | | {36, -198} | {64, -170} | {90, -144} | {-130,130} |
| | {-224, 10} | | | | |
| | RU 6 | RU 7 | RU 8 | RU 9 | |
| | [-109:2:-97] &[-94:2:-84] &[138:2:150]& [153:2:163] | [-83:2:-71] &[-68,2:-58] &[164:2:176]& [179:189] | [-55:2:-43] &[-40:2:-30] &[192:2:204]& [207:2:217] | [-29:2:-17] &[-14:2:-4] &[218:2:230]& [233:2:243] | |
| | {-90, 144} | {-64, 170} | {-36, 198} | {-10, 224} | |
| | RU 10 | RU11 | RU 12 | RU 13 | RU 14 |
| | [-242:2:-230] & [-229:2:-219] &[5:2:17] & [18:2:28] | [-216:2:-204] & [-203:2:-193] &[31:2:43] &[44:2:54] | [-188:2:-176] & [-175:2:-165] &[59:2:71] &[72:2:82] | [-162:2:-150] & [-149:2:-139] &[85:2:97] &[98:2:108] | [-135:2:-123] & [-122:2:-112] &[112:2:124]& [125:2:135] |
| | {-238, 24} | {-212, 50} | {-184, 78} | {-158, 104} | {-116, 116} |
| | RU 15 | RU 16 | RU 17 | RU 18 | |
| | [-108:2:-96] &[-95:2:-83] &[139:2:151]& [152:2:162] | [-82:2:-70] &[-69:2:-59] &[165:2:177]& [178:2:188] | [-54:2:-42] &[-41:2:-31] &[193:2:205]& [206:2:216] | [-28:2:-16] -13:2:-3] &[219:2:231]& [232:2:242] | |
| | {-104, 158} | {-78, 184} | {-50,212} | {-24, 238} | |
| 52-tone RU | RU 1 | RU 2 | RU 3 | RU 4 | |
| | [-243:2:-217] & [-214:2:-192] &[4:2:30] &[33:2:55] | [-189:2:-163] & [-160:2:-138] &[58:2:84] &[87:2:109] | [-109:2:-83] &[-80:2:-58] &[138:2:164]& [167:2:189] | [-55:2:-29] &[-26:2:-4] &[192:2:218]& [221:2:243] | |
| | | | {-78, -64, 144, 158} | {-24, -10, 198, 212} | |
| | {-212, -198, 10, 24} | {-158, -144, 64,78} | | | |
| | RU 5 | RU 6 | RU 7 | RU 8 | |
| | [-242:2:-216] & [-215:2:-191] &[5:2:31] | [-188:2:-162] & [-159:2:-137] &[59:2:85] | [-108:2:-82] &[-79:2:-57] &[139:2:165]& [166:2:188] | [-54:2:-28] &[-25:2:-3] &[193:2:219]& [220:2:242] | |
| | &[32:2:54] | &[86:2:108] | {-104, -90, | {-50, -36, 224, | |
| | {-238, -224, 36, 50} | {-184, -170, 90, 104} | 170, 184} | 238} | |
| 106-tone RU | RU 1 | RU 2 | RU 3 | RU 4 | |
| | [-243:2:-191] & [-188:2:-138] &[4:2:56] &[59:2:109] | [-109:2:-57] &[-54:2:-4] &[138:2:190]& [193:2:243] | [-242:2:-190] & [-189:2:-139] &[5:2:57] &[58:2:108] | [-108:2:-56] &[-55:2:-5] &[139:2:191]& [192:2:242] | |
| | | {-36, -10, 144, 170} | | {-104, -78, 212, 238} | |
| | {-170, -144, 10,36} | | {-238,-212, 78,104} | | |
| 242-tone RU | RU 1 | | RU 2 | | |
| | [-244:2:-124]&[-121:2:-3]&[3:2:123]&[126:2:244] | | [-243:2:-123]&[-122:2:-4]&[4:2:124]&[125:2:243] | | |
| | {-238, -212, -170, -144, 144, 170, 212, 238} | | 1-104, -78, -36, -10, 10, 36, 78, 104} | | |
| 484-tone RU | RU 1 | | | | |
| 16 pilots | [-244: -3, 3: 244] | | | | |
| | 1-238, -212, -170, -144, -104, -78, -36, -10, 10, 36, 78, 104, 144, 170, 212, 238} | | | | |
| | (not discrete) | | | | |

In Table 5, a combination of at least two RUs that meet the condition of the discrete RU group may be understood as one RU group. Details are not described herein again.

When the bandwidth is 40 MHz, a discrete 26-tone RU allocated to a station may be one of a DRU 1 to a DRU 18 in a row of 26-tone RU in Table 5.

Specifically, the DRU 1 in the row of 26-tone RU in Table 5 includes two sub-RUs, and one sub-RU of the DRU 1 includes odd-numbered subcarriers between a subcarrier -243 and a subcarrier -231, and even-numbered subcarriers between a subcarrier -228 and a subcarrier -218. The subcarrier -224 in the DRU 1 is a pilot subcarrier. It can be learned that one sub-RU of the DRU 1 is located on a first 20 MHz of the 40 MHz.

The other sub-RU of the DRU 1 includes even-numbered subcarriers between a subcarrier 4 and a subcarrier 16, and odd-numbered subcarriers between a subcarrier 19 and a subcarrier 29. The subcarrier 10 in the other sub-RU is a pilot subcarrier. It can be learned that the other sub-RU of the DRU 1 is located on a second 20 MHz of the 40 MHz.

The DRU 2 in the row of 26-tone RU in Table 5 includes two sub-RUs, and one sub-RU of the DRU 2 includes odd-numbered subcarriers between subcarriers -217 and -205 and even-numbered subcarriers between subcarriers -174 and -164. The subcarrier -170 in the DRU is a pilot subcarrier. One sub-RU of the DRU 2 is located on the first 20 MHz of the 40 MHz.

The other sub-RU of the DRU 2 includes even-numbered subcarriers between a subcarrier 30 and a subcarrier 42, and odd-numbered subcarriers between a subcarrier 45 and a subcarrier 55. The subcarrier 36 of the other sub-RU of the DRU 2 is a pilot subcarrier. The other sub-RU of the DRU 2 is located on the second 20 MHz of the 40 MHz.

Similarly, each of other discrete 26-tone RUs (an RU 3 to an RU 18 in the row of 26-tone RU) in Table 5 includes two sub-RUs, one sub-RU is located on a first 20 MHz of 40 MHz, and the other sub-RU is located on a second 20 MHz of the 40 MHz. Each sub-RU includes two subcarrier subgroups, an index of one subcarrier in one subcarrier subgroup is an odd number, and an index of a subcarrier in the other subcarrier subgroup is an even number. Each of the two sub-RUs includes at least one pilot subcarrier.

When the bandwidth is 40 MHz, a discrete 52-tone RU allocated to a station may be one of a DRU 1 to a DRU 8 in a row of 52-tone RU in Table 5.

The DRU 1 in the row of 52-tone RU in Table 5 includes two sub-RUs. One sub-RU of the DRU 1 includes odd-numbered subcarriers between a subcarrier -243 and a subcarrier -217 and even-numbered subcarriers between a subcarrier -214 and a subcarrier -192. The subcarrier -212 and the subcarrier -198 of the one sub-RU of the DRU 1 are pilot subcarriers. One sub-RU of the DRU 1 is located on the first 20 MHz of 40 MHz.

The other sub-RU of the DRU 1 includes even-numbered subcarriers between a subcarrier -4 and a subcarrier 30, and odd-numbered subcarriers between a subcarrier 33 and a subcarrier 55. The subcarrier 20 and the subcarrier 24 of the other sub-RU of the DRU 1 are pilot subcarriers. The other sub-RU of the DRU 1 is located on the second 20 MHz of 40 MHz.

Similarly, each of other discrete 52-tone RUs (a DRU 2 to a DRU 8 in the row of 52-tone RU) in Table 5 includes two sub-RUs, one sub-RU is located on the first 20 MHz of 40 MHz, and the other sub-RU is located on the second 20 MHz of the 40 MHz. Each sub-RU includes two subcarrier subgroups, an index of one subcarrier in one subcarrier subgroup is an odd number, and an index of a subcarrier in the other subcarrier subgroup is an even number. Each of the two sub-RUs includes at least one pilot subcarrier.

When the bandwidth is 40 MHz, a discrete 106-tone RU allocated to a station may be one of a DRU 1 to a DRU 4 in a row of 106-tone RU in Table 5.

The RU 1 in the row of 106-tone RU in Table 5 includes two sub-RUs. One sub-RU of the RU 1 includes odd-numbered subcarriers between a subcarrier -243 and a subcarrier -191, and even-numbered subcarriers between a subcarrier -188 and a subcarrier -138. The subcarrier -170 and the subcarrier -144 of one sub-RU of the RU 1 are pilot subcarriers. One sub-RU of the RU 1 is located on the first 20 MHz of the 40 MHz.

The other sub-RU of the RU 1 includes even-numbered subcarriers between a subcarrier 4 and a subcarrier 56, and odd-numbered subcarriers between a subcarrier 59 and a subcarrier 109. The subcarrier 1- and the subcarrier 36 of the other sub-RU of the RU 1 are pilot subcarriers. The other sub-RU of the RU 1 is located on the second 20 MHz of the 40 MHz.

Similarly, each of other discrete 106-tone RUs (a DRU 2 to a DRU 4 in the row of 106-tone RU) in Table 5 includes two sub-RUs, one sub-RU is located on the first 20 MHz of 40 MHz, and the other sub-RU is located on the second 20 MHz of the 40 MHz. Each sub-RU includes two subcarrier subgroups, an index of one subcarrier in one subcarrier subgroup is an odd number, and an index of a subcarrier in the other subcarrier subgroup is an even number. Each of the two sub-RUs includes at least one pilot subcarrier.

When the bandwidth is 40 MHz, a discrete 242-tone RU allocated to a station may be a DRU 1 or a DRU 2 in a row of 242-tone RU in Table 5.

As shown in Table 5, the DRU 1 in the row of 242-tone RU includes two sub-RUs. One sub-RU of the DRU 1 includes even-numbered subcarriers between a subcarrier -244 and a subcarrier -124, and odd-numbered subcarriers between a subcarrier -121 and a subcarrier -3. The subcarrier -238, the subcarrier -212, the subcarrier - 170, and the subcarrier -144 in one sub-RU of the DRU 1 are pilot subcarriers. One sub-RU of the DRU 1 is located on the first 20 MHz of the 40 MHz.

The other sub-RU of the DRU 1 includes odd-numbered subcarriers between a subcarrier 3 and a subcarrier 123, and even-numbered subcarriers between a subcarrier 126 and a subcarrier 244. The subcarrier 144, the subcarrier 170, the subcarrier 212, and the subcarrier 238 of the other sub-RU of the DRU 1 are pilot subcarriers. The other sub-RU of the DRU 1 is located on the second 20 MHz of the 40 MHz.

Similarly, the DRU 2 in the row of 242-tone RU in Table 5 also includes two sub-RUs, where one sub-RU is located on the first 20 MHz of 40 MHz, and the other sub-RU is located on the second 20 MHz of the 40 MHz. Each sub-RU includes two subcarrier subgroups, an index of one subcarrier in one subcarrier subgroup is an odd number, and an index of a subcarrier in the other subcarrier subgroup is an even number. Each of the two sub-RUs includes at least one pilot subcarrier.

According to a similar principle, when the bandwidth is greater than or equal to 80 MHz, a discrete RU allocated to a station may include four sub-RUs. The four sub-RUs are respectively located on four 20 MHz of 80 MHz. Each sub-RU includes two subcarrier subgroups, an index of one subcarrier in one subcarrier subgroup is an odd number, and an index of a subcarrier in the other subcarrier subgroup is an even number. Each of the four sub-RUs includes at least one pilot subcarrier.

When the bandwidth is greater than or equal to 160 MHz, a discrete RU allocated to one station may include eight sub-RUs. The eight sub-RUs are respectively located on eight 20 MHz of 160 MHz. Each sub-RU includes two subcarrier subgroups, an index of one subcarrier in one subcarrier subgroup is an odd number, and an index of a subcarrier in the other subcarrier subgroup is an even number. Each of the eight sub-RUs includes at least one pilot subcarrier.

When the bandwidth is greater than or equal to 320 MHz, a discrete RU allocated to a station may include 16 sub-RUs. The 16 sub-RUs are respectively located on sixteen 20 MHz of 320 MHz. Each sub-RU includes two subcarrier subgroups, an index of one subcarrier in one subcarrier subgroup is an odd number, and an index of a subcarrier in the other subcarrier subgroup is an even number. Each of the 16 sub-RUs includes at least one pilot subcarrier.

In still another possible implementation, the bandwidth is greater than or equal to 40 MHz, and a discrete RU includes a plurality of subcarrier groups. One subcarrier group includes a plurality of contiguous subcarriers. A quantity of contiguous subcarriers in any one of the plurality of subcarrier groups is less than 13. The plurality of subcarrier groups are respectively located on different 20 MHz.

For example, the discrete RU is a discrete 26-tone RU. The discrete 26-tone RU is divided into four subcarrier groups, where 1^{st} to 7^{th} subcarriers are one subcarrier group, 8^{th} to a 14^{th} subcarriers are one subcarrier group, 15^{th} to 20^{th} subcarriers are one subcarrier group, and 21^{st} to 26^{th} subcarriers are one subcarrier group. The four subcarrier groups are respectively located on different 20 MHz. For example, the 1^{st} to 7^{th} subcarriers of the discrete 26-tone RU are located on the first 20 MHz of 80 MHz, the 8^{th} to 14^{th} subcarriers are located on the second 20 MHz of 80 MHz, the 15^{th} to 20^{th} subcarriers are located on the third 20 MHz of 80 MHz, and the 21^{st} to 26^{th} subcarriers are located on the fourth 20 MHz of 80 MHz.

For another example, the discrete RU is a 52-tone RU. The 52-tone RU may include eight subcarrier groups that are respectively located on different 20 MHz. A discrete RU whose quantity of subcarriers is greater than 52 may also include a plurality of subcarrier groups, and each of the plurality of subcarrier groups is located on different 20 MHz.

A quantity of subcarrier groups included in the discrete RU is not limited to the quantities in the foregoing examples in this application.

In yet another possible implementation, the bandwidth is greater than or equal to 40 MHz, the discrete RU includes a plurality of sub-RUs, each sub-RU includes a plurality of subcarrier groups, and each subcarrier group includes a plurality of contiguous subcarriers. A quantity of contiguous subcarriers in any subcarrier group is less than 13. The plurality of sub-RUs are respectively located on different 20 MHz.

For example, the bandwidth is greater than or equal to 80 MHz. The discrete RU is a 52-tone RU. The 52-tone RU includes four sub-RUs, each sub-RU includes two subcarrier groups, and the four sub-RUs are located on different 20 MHz.

More specifically, one 20 MHz in the bandwidth includes one sub-RU, and the sub-RU includes two subcarrier groups. One subcarrier group includes 1^{st} to 7^{th} subcarriers in the 52-tone RU, the other subcarrier group includes 8^{th} to 14^{th} subcarriers in the 52-tone RU, and the 7^{th} subcarrier and the 8^{th} subcarrier are noncontiguous.

Another 20 MHz in the bandwidth includes another sub-RU. The sub-RU includes two subcarrier groups. One subcarrier group includes 15^{th} to 21^{st} subcarriers in the 52-tone RU, the other subcarrier group includes 22^{nd} to 28^{th} subcarriers in the 52-tone RU, and the 21^{st} subcarrier and the 22^{nd} subcarrier are noncontiguous.

Another 20 MHz in the bandwidth includes another sub-RU. The sub-RU includes two subcarrier groups. One subcarrier group includes subcarriers 29 to 34 in the 52-tone RU, the other subcarrier group includes subcarriers 35 to 40 in the 52-tone RU, and the subcarrier 34 and the subcarrier 35 are noncontiguous.

Still another 20 MHz in the bandwidth includes still another sub-RU, and the sub-RU includes two subcarrier groups. One subcarrier group includes 1^{st} to 7^{th} subcarriers in the 52-tone RU, the other subcarrier group includes 8^{th} to 15^{th} subcarriers in the 52-tone RU, and the 7^{th} subcarrier and the 8^{th} subcarrier are noncontiguous.

Similarly, the discrete RU is a 106-tone RU, and the discrete 106-tone RU may also include four sub-RUs that are respectively located on different 20 MHz. Each of the four sub-RUs may include four subcarrier groups, and each subcarrier group includes a plurality of contiguous subcarriers. In the four subcarrier groups of each sub-RU, any two subcarriers belonging to different subcarrier groups are noncontiguous.

The discrete RU is a 242-tone RU, and the 242-tone RU may also include four sub-RUs that are located on different 20 MHz. Each of the four sub-RUs may include eight subcarrier groups, and each subcarrier group includes a plurality of contiguous subcarriers. In the eight subcarrier groups of each sub-RU, any two subcarriers belonging to different subcarrier groups are noncontiguous.

A discrete RU whose quantity of subcarriers is greater than 242 may also include a plurality of subcarrier groups, and each of the plurality of subcarrier groups is located on different 20 MHz. A quantity of contiguous subcarriers included in each subcarrier group is less than 13.

A quantity of sub-RUs included in the discrete RU and a quantity of subcarrier groups included in the sub-RU are not limited to the quantities in the foregoing examples in this application.

It should be understood that, in the foregoing plurality of possible implementations of the subcarrier ranges of the discrete RU and the locations of the pilot subcarriers, specific examples (Table 4 to Table 6) of the subcarrier ranges of the discrete RU are provided only for the bandwidth of 20 MHz and the bandwidth of 40 MHz. In this embodiment of this application, the foregoing plurality of possible implementations of the subcarrier ranges of the discrete RU and the locations of the pilot subcarriers are not limited to scenarios of the bandwidth of 20 MHz and the bandwidth of 40 MHz. The method may also be used in a scenario in which the bandwidth is greater than or equal to 40 MHz, for example, may also be used in scenarios in which the bandwidth is 80 MHz, the bandwidth is 160 MHz, and the bandwidth is 320 MHz.

In this embodiment of this application, one discrete RU and another discrete RU may form a discrete multi-RU (multi-RU, MRU), or one discrete RU and one contiguous RU may form a discrete MRU. The discrete MRU can be allocated to one or more stations. In other words, one or more RUs allocated to one station may include a plurality of discrete RUs. The discrete RU in the discrete multi-RU may be the discrete RU in any one of the foregoing embodiments.

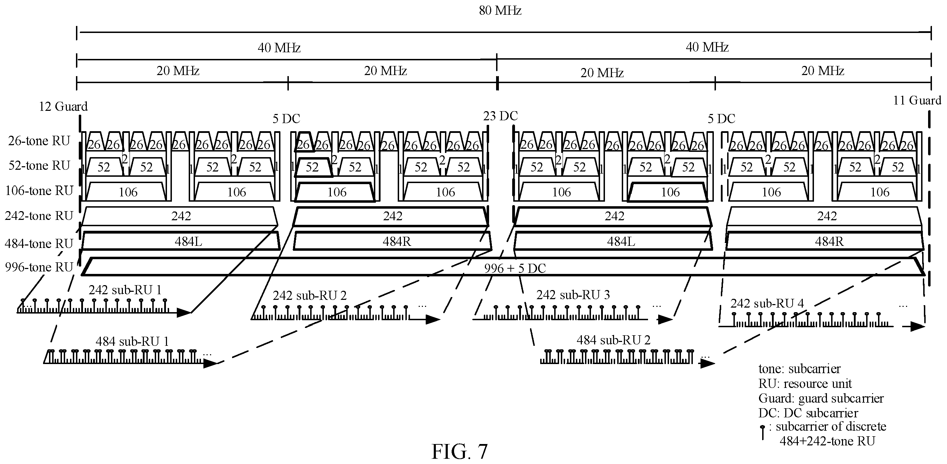

For example, in a schematic diagram of resource unit allocation shown in FIG. 7, when a bandwidth is greater than or equal to 80 MHz, the bandwidth includes a discrete 484+242-tone RU. The discrete 484+242-tone RU includes a discrete 242-tone RU and a discrete 484-tone RU.

The 484 may include two sub-RUs (for example, a 484 sub-RU 1 and a 484 sub-RU 2 in FIG. 7), and each sub-RU is located on one 40 MHz of 80 MHz. The 242-tone RU may further include four sub-RUs (for example, a 242 sub-RU 1, a 242 sub-RU 2, a 242 sub-RU 3, and a 242 sub-RU 4 in FIG. 7) that are each located on one 20 MHz of 80 MHz.

For another example, the bandwidth may include a discrete 52+26-tone RU, the discrete 52+26-tone RU includes a discrete 52-tone RU and a discrete 26-tone RU, and a tone plan of the discrete 52-tone RU and the discrete 26-tone RU may be one of the tone plans of the discrete RU provided in the foregoing embodiments.

A discrete 106+52-tone RU in the bandwidth includes a discrete 106-tone RU and a discrete 52-tone RU, and a tone plan of the discrete 106-tone RU and the discrete 52-tone RU may be one of the tone plans of the discrete RU provided in the foregoing embodiments.

Similarly, for a discrete multi-RU of another size, a tone plan of discrete RUs in the discrete multi-RU may also be one of the tone plans of the discrete RU provided in the foregoing embodiments.

In this embodiment of this application, a discrete RU whose quantity of subcarriers is greater than or equal to 242 may be allocated to a plurality of users, to support the plurality of users to perform multi-user multiple-input multiple-output (multiple user multiple input multiple output, MU-MIMO) transmission.

Based on the foregoing tone plans of some discrete RUs, an indication manner of resource unit allocation information is described.

In a possible implementation, the resource unit allocation information indicates a size of a discrete RU and an index of the discrete RU. For example, in Table 3 to Table 5, an index (DRU X) of each discrete RU of a same size corresponds to a subcarrier range of one discrete RU and a pilot subcarrier of the discrete RU. In this way, the resource unit allocation information may indirectly indicate the subcarrier range of the discrete RU and the pilot subcarrier of the discrete RU by indicating the index of the discrete resource unit.

Specifically, in a downlink multi-user transmission scenario, step 501 may be implemented by sending a PPDU by an access point to a station. A resource unit allocation subfield in the PPDU includes a common field and a user specific field includes the resource unit allocation indication information, and a user field in the user specific field in the PPDU includes station information. The resource unit allocation subcarrier includes an index indicating resource unit allocation, and the index indicating resource unit allocation indicates an RU distribution status in a frequency domain range of a granularity and a quantity of user fields that are in the user specific field and that correspond to each RU in the frequency domain range. The frequency domain range of the granularity may be, for example, but is not limited to, 20 MHz.

For example, the resource unit allocation subfield indicates, based on a correspondence between an index indicating resource unit allocation and an RU distribution status, one or more contiguous RUs that are distributed in sequence within 20 MHz based on the index of resource unit allocation. In a specific example, as shown in Table 6, the resource unit allocation subfield may use an index in Table 6 to indicate a contiguous RU distributed within 20 MHz. A correspondence between an index and an RU distribution status in Table 6 is merely used as an example for description. That the resource unit allocation subfield needs to use the index in Table 6 to indicate a resource unit allocation status is not limited in this application.

**Table 6**

| Resource unit allocation subfield (B7, B6, B5, B4, B3, B2, B1, B0) | #1 | #2 | #3 | #4 | #5 | #6 | #7 | #8 | #9 | Entry quantity |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |
| 00001011 | 52 | | 26 | 26 | 26 | 52 | | 52 | | 1 |
| 00001100 | 52 | | 52 | | 26 | 26 | 26 | 26 | 26 | 1 |
| 00001101 | 52 | | 52 | | 26 | 26 | 26 | 52 | | 1 |
| 00001110 | 52 | | 52 | | 26 | 52 | | 26 | 26 | 1 |
| 00001111 | 52 | | 52 | | 26 | 52 | | 52 | | 1 |
| ... | ... | | | | | | | | | ... |

The first column in Table 6 is an index indicating resource unit allocation. An RU in a row of each index is a distribution status of the RU corresponding to the index.

The station may determine an allocation order of resource units on the bandwidth and a size (a quantity of subcarriers) of each resource unit based on the index of the resource unit allocation subfield. The station may determine a correspondence between an RU and a subcarrier based on an order in which RUs of different sizes appear in the bandwidth. When an RU of a specific size appears at each possible sequential location in the bandwidth, a correspondence between an RU and a subcarrier is specified in a standard.

Table 1 and Table 2 in the foregoing examples may be used to specify a correspondence between a contiguous RU and a subcarrier, and Table 3 to Table 5 may be used to specify a correspondence between a discrete RU and a subcarrier and a correspondence between a special contiguous RU and a subcarrier. In other words, Table 1 and Table 2 may be used to specify a subcarrier range corresponding to a contiguous RU and locations of pilot subcarriers of the RU in the bandwidth. Table 3 to Table 5 may be used to specify a subcarrier range corresponding to a discrete RU and a special contiguous RU, and locations of pilot subcarriers of the RU in bandwidth. It can be learned that the correspondence between the discrete RU and the subcarrier is different from the correspondence between the contiguous RU and the subcarrier. The AP may notify a type of an RU by sending RU type indication information to the STA. Alternatively, before sending the resource scheduling information, the AP may negotiate the type of the RU with the STA.

For example, when the bandwidth is 20 MHz, and all RUs in the bandwidth of 20 MHz are contiguous RUs, the station determines, based on the RU type indication information sent by the access point, that all the RUs in the bandwidth are contiguous RUs, or before receiving the resource unit allocation subfield, the station and the access point negotiate that all the RUs in the bandwidth are contiguous RUs. If the resource unit allocation subfield is an index 00000010, the station may determine that RUs included in the 20 MHz include seven 26-tone RUs and one 52-tone RU in sequence. The station may determine, based on a distribution status of RUs that is indicated by the index, that the seven 26-tone RUs are in a one-to-one correspondence with the RU 1 to the RU 7 in the row of 26-tone RU in Table 1, and the 52-tone RU corresponds to the RU 4 in the row of 52-tone RU in Table 1. The station may determine, based on the RU 1 to the RU 7 in the row of 26-tone RU in Table 1 that specifies the correspondence between a contiguous RU and a subcarrier, a subcarrier range corresponding to each 26-tone RU in the seven 26-tone RUs and locations of pilot subcarriers in the bandwidth; and determines a subcarrier range of the 52-tone RU on 20 MHz and locations of pilot subcarriers in the bandwidth based on the RU 4 in the row of 52-tone RU in Table 1.

When all RUs in a frequency domain range of one granularity corresponding to an index indication indicating resource unit allocation are RUs less than or equal to 242 subcarriers, each RU corresponds to one user field in one user specific field. A sorting sequence of user fields in the user specific field is consistent with a sequence of corresponding resource units indicated by the resource unit allocation subfield. For example, the resource unit allocation subfield is an index 00000010. In user fields corresponding to the resource unit allocation subfield, stations corresponding to the first to the seventh user fields are allocated to the first to the seventh 26-tone RUs, and a station corresponding to the eighth user field is allocated to the 52-tone RUs.

When an index indicating resource unit allocation indicates that an RU in a frequency domain range of a granularity corresponding to the index indicating resource unit allocation is an RU greater than or equal to 242 subcarriers, the index indicating resource unit allocation further indicates a quantity of user fields contributed by the RU in the user specific field on a content channel on which the resource unit allocation subfield is located, or further indicates a quantity of user fields corresponding to the RU.

For another example, the bandwidth is 20 MHz, and the 20 MHz includes two discrete 52-tone RUs, one special contiguous 26-tone RU, and two discrete 52-tone RUs in sequence. Before the station determines, based on the RU type indication information sent by the access point, that all the RUs on the bandwidth are discrete RUs or that the bandwidth includes only discrete RUs and special contiguous RUs, or before receiving the resource unit allocation subfield, the station and the access point negotiate that all the RUs on the bandwidth are contiguous RUs or that the bandwidth includes only discrete RUs and special contiguous RUs.

The resource unit allocation subfield corresponding to 20 MHz may be an index 00001111 in Table 6. The station may determine, based on the index 00001111, that the 20 MHz includes two discrete 52-tone RUs, one 26-tone RU, and two discrete 52-tone RUs in sequence. Discrete RUs appear in groups in bandwidth. An RU indicated by the index 00001111 includes only one 26-tone RU. In this case, the station may identify that the one 26-tone RU is a contiguous 26-tone RU. Alternatively, a user field corresponding to the one 26-tone RU indicates that the 26-tone RU is a contiguous 26-tone RU, and the station can also identify that the 26-tone RU is a contiguous 26-tone RU. The four discrete 52-tone RUs arranged in sequence may be in a one-to-one correspondence with the DRU 1 to the DRU 4 in the row of 52-tone RU in Table 4, the contiguous 26-tone RU may correspond to the DRU 5 in the row of 26-tone RU in Table 4, and the 26-tone RU is a special contiguous 26-tone RU. In this way, the station can determine a subcarrier range of each discrete 52-tone RU in the four discrete 52-tone RUs and locations of pilot subcarriers of each discrete 52-tone RU in the bandwidth based on the DRU 1 to the DRU 4 in the row of 52-tone RU in Table 4 that is used to specify a correspondence between a discrete RU and a subcarrier. The station can further determine, based on the DRU 5 in the row of 26-tone RU in Table 4, a subcarrier range of the contiguous 26-tone RU and locations of pilot subcarriers of the contiguous 26-tone RU in the bandwidth.

In a scenario of a discrete RU, a sorting sequence of user fields in the user specific field is consistent with a sequence of corresponding resource units indicated by the resource unit allocation subfield. For example, based on an example in which 20 MHz corresponding to the resource unit allocation subfield indication includes two discrete 52-tone RUs, one contiguous 26-tone RU, and two discrete 52-tone RUs in sequence, a first discrete 52-tone RU (a subcarrier range corresponding to the DRU 1 in the row of 52-tone RU) is allocated to a station corresponding to a first user field, a second discrete 52-tone RU (a subcarrier range corresponding to the DRU 2 in the row of 52-tone RU) is allocated to a station corresponding to a second user field, a contiguous 26-tone RU (a subcarrier range corresponding to the DRU 5 in the row of the 26-tone RU) is allocated to a station corresponding to a third user field, a third 52-tone RU (a subcarrier range corresponding to the DRU 3 in the row of 52-tone RU) is allocated to a station corresponding to a fourth user field, and a fourth 52-tone RU (a subcarrier range corresponding to the DRU 4 in the row of 52-tone RU) is allocated to a station corresponding to a fifth user field.

In an uplink multi-user transmission scenario, step 501 may be implemented by that an access point sends a trigger frame to a station. A resource unit allocation subfield in a user field in the trigger frame includes the resource unit allocation indication information, and an association identifier (association identification, AID) subfield of the user field includes station information. The AID subfield indicates a station corresponding to the user field.

A resource unit allocation subfield in each user field indicates a size of an RU (a discrete RU or a contiguous RU) allocated to a station corresponding to the user field and a location of the RU allocated to the station in the bandwidth. The station can determine, based on the resource unit allocation subfield in the user field, the size of the RU allocated to the station and the location of the RU in the bandwidth, so as to determine, based on the location of the RU in the bandwidth and the size of the RU, a subcarrier range corresponding to the RU and locations of pilot subcarriers of the RU in the bandwidth.

It can be learned that in this application, an indication manner for indicating a contiguous RUs and an indication manner for indicating a discrete RU by using the resource unit allocation subfield are not distinguished. When the bandwidth includes only a contiguous RU, or the bandwidth includes only a discrete RU, or the bandwidth includes only a discrete RU and a special contiguous RU, the indication manner of the resource unit allocation subfield is the same. The resource unit allocation subfield indicates the size of the RU and an occurrence sequence of the RU. The station may determine a subcarrier range of an allocated discrete RU based on the size of the RU and the occurrence sequence of the RU and a correspondence that is between a discrete RU and a subcarrier and that is specified in a standard, or may determine a subcarrier range of an allocated contiguous RU based on a correspondence that is between a contiguous RU and a subcarrier and that is specified in a standard.

In another possible implementation, the resource unit allocation information indicates an index of a first subcarrier in a start subcarrier group in a discrete resource unit, a quantity of subcarriers included in a subcarrier group, and a subcarrier group spacing; or the resource unit allocation information indicates an index of a last subcarrier in a start subcarrier group in a discrete resource unit, a quantity of subcarriers included in a subcarrier group, and a subcarrier group spacing; or the resource unit allocation information indicates an index of a first subcarrier in an end subcarrier group in a discrete resource unit, a quantity of subcarriers included in a subcarrier group, and a subcarrier group spacing; or the resource unit allocation information indicates an index of a last subcarrier in an end subcarrier group in a discrete resource unit, a quantity of subcarriers included in a subcarrier group, and a subcarrier group spacing.

The start subcarrier group is a subcarrier group with a lowest frequency in the discrete unit, and the end subcarrier group is a subcarrier group with a highest frequency in the discrete unit.

The subcarrier group spacing indicates a quantity of subcarriers between every two adjacent subcarrier groups. The quantity of subcarriers between every two adjacent subcarrier groups is a quantity of subcarriers that are used as a spacing between every two adj acent subcarrier groups and that belong to another resource unit, and a quantity of guard subcarriers, null subcarriers, and direct current subcarriers is not included.

The subcarrier group spacing may indicate a quantity of subcarriers between first subcarriers in two subcarrier groups, or indicate a difference between indexes of first subcarriers in two subcarrier groups.

Alternatively, the subcarrier group spacing may indicate a quantity of subcarriers between last subcarriers in the two subcarrier groups, or indicate a difference between indexes of last subcarriers in the two subcarrier groups.

Alternatively, the subcarrier group spacing may indicate a quantity of subcarriers between subcarriers at middle locations in two subcarrier groups, or indicate a difference between indexes of subcarriers at middle locations in two subcarrier groups.

The subcarrier group spacing may further indicate a quantity of subcarriers between a last subcarrier in a previous subcarrier group and a first subcarrier in a next subcarrier group, or indicate a difference between an index of a last subcarrier in a previous subcarrier group and an index of a first subcarrier in a next subcarrier group.

In this way, the station can determine a quantity of subcarriers in the discrete RU and a location of each subcarrier in the bandwidth based on the index of the first subcarrier in the start subcarrier group of the discrete RU indicated by the resource unit allocation information, the quantity of subcarriers included in the subcarrier group, and the subcarrier group spacing. Alternatively, the station can determine a quantity of subcarriers in the discrete RU and a location of each subcarrier in the bandwidth based on the index of the last subcarrier in the start subcarrier group of the discrete RU indicated by the resource unit allocation information, the quantity of subcarriers included in the subcarrier group, and the subcarrier group spacing.

Specifically, when subcarrier spacings between every two adjacent subcarrier groups in a plurality of discrete subcarrier groups included in a discrete resource unit are the same, the resource unit allocation information may indicate a quantity of subcarrier groups in a discrete RU allocated to one station, an index of a first subcarrier in a start subcarrier group in the discrete RU, and a subcarrier spacing; or the resource unit allocation information may indicate a quantity of subcarriers in a discrete RU allocated to one station, an index of a last subcarrier in an end subcarrier group in the discrete RU, and a subcarrier group spacing.

In some embodiments, the resource unit allocation information may indicate a quantity of subcarriers in a discrete RU allocated to one station, an index of a start subcarrier in the discrete RU, and a subcarrier spacing; or the resource unit allocation information may indicate a quantity of subcarriers in a discrete RU allocated to one station, an index of an end subcarrier in the discrete RU, and a subcarrier spacing; or the resource unit allocation information indicates an index of a start subcarrier, an index of an end subcarrier, and a subcarrier spacing in the discrete resource unit.

The subcarrier spacing indicates a quantity of subcarriers that belong to another resource unit that are used as a spacing of between every two adjacent subcarriers in the discrete resource unit, or indicates an index difference between every two adjacent subcarriers.

For example, the bandwidth is 20 MHz, and a discrete 26-tone RU is included. There is a spacing of three subcarriers between every two adjacent subcarriers in 26 subcarriers of the discrete 26-tone RU, and a subcarrier with a lowest frequency in the discrete 26-tone RU is a subcarrier -121. The resource unit allocation information may indicate that a quantity of subcarriers of the discrete RU is 26, an index of the start subcarrier is -121, and a subcarrier spacing is 3. In this way, a device for receiving the resource unit allocation information can determine, based on the resource unit allocation information, a frequency range of the discrete 26-tone RU and that the 20 MHz includes a discrete RU.

In some other embodiments, the resource unit allocation information may alternatively indicate only an index of each subcarrier of the discrete RU, and does not need to indicate an index of a start subcarrier, an index of an end subcarrier, or a subcarrier spacing.

In some optional embodiments of this application, the resource scheduling information further includes RU type indication information. In this way, the station can determine whether the RU allocated to the station is a discrete RU or a contiguous RU, so that the station can accurately obtain a location of a subcarrier of the RU allocated to the station.

In a downlink multi-user transmission scenario, a signal field in a PPDU includes RU type indication information, and the RU type indication information may also be understood as discrete RU/contiguous RU indication information. Specifically, the signal field in the PPDU includes a universal-signal field universal signal field U-SIG (universal SIG, U-SIG) and an extremely high throughput signal field (extremely high throughput, EHT-SIG). The EHT-SIG includes a common field and a user specific field.

In a possible implementation, the U-SIG or the common field includes RU type indication information, to indicate that all RUs included in the bandwidth are discrete RUs or contiguous RUs.

In this way, it can be indicated to a receive end that all RUs included in the bandwidth are discrete RUs or contiguous RUs, so that the receive end can read the resource unit allocation information based on a correspondence between a discrete RU or a contiguous RU and a subcarrier. When the RU type indication information indicates that all RUs included in the bandwidth are discrete RUs, the bandwidth may include only discrete RUs, or may include a discrete RU and a special contiguous RU.

In another possible implementation, the user field includes RU type indication information, to indicate that an RU allocated to a station corresponding to the user field is a discrete RU or a contiguous RU.

In this way, the bandwidth can support hybrid transmission of a discrete RUs and a contiguous RU, that is, the bandwidth may include both a discrete RU and a contiguous RU. In addition, based on the RU type indication information in the user field, the receive end can determine whether an RU allocated to the receive end is a discrete RU or a contiguous RU, so that the receive end (for example, a station) can read resource unit allocation information based on a correspondence between a discrete RU or a contiguous RU and a subcarrier, to accurately obtain a subcarrier range of a resource unit allocated to the receive end.

For example, the bandwidth is 20 MHz, and the 20 MHz includes a discrete 52-tone RU, a discrete 52-tone RU, a contiguous 26-tone RU, a contiguous 52-tone RU, and a contiguous 52-tone RU in sequence, which are respectively allocated to stations 1 to 5. The resource unit allocation subfield is an index 00001111 in the index table 6. RU type indication information in user fields of the station 1 and the station 2 indicates that an RU type is a discrete RU, and RU type indication information in user fields of the station 3, the station 4, and the station 5 indicates that an RU type is a contiguous RU. In this way, the station 1 and the station 2 can read, based on a correspondence between a discrete RU and a subcarrier, the resource unit allocation information, and determine a subcarrier range of a discrete RU allocated to the station and locations of pilot subcarriers in the bandwidth. The station 3, the station 4, and the station 5 can read, based on a correspondence between a contiguous RU and a subcarrier, the resource unit allocation information, and determine a subcarrier range of a discrete RU allocated to the station, and location of pilot subcarriers in the bandwidth.

In an uplink multi-user transmission scenario, a trigger frame sent by the access point to the station includes RU type indication information.

In a possible implementation, the trigger frame includes a common field and a user information list field. The common field in the trigger frame includes RU type indication information, to indicate that all RUs included in the bandwidth are discrete RUs or contiguous RUs. When the RU type indication information indicates that all RUs included in the bandwidth are discrete RUs, the bandwidth may include only discrete RUs, or may include a discrete RU and a special contiguous RU.

In this way, a type of RUs included in the bandwidth can be indicated to a receive end, so that the receive end can obtain the resource unit allocation information based on a correspondence between a discrete RU or a contiguous RU and a subcarrier. When the RU type indication information indicates that all RUs included in the bandwidth are discrete RUs, the bandwidth may include only discrete RUs, or may include a discrete RU and a special contiguous RU.

In another possible implementation, the trigger frame includes the user information list field, the user information list field includes one or more user fields, and the user field includes RU type indication information for indicating that an RU allocated to a station corresponding to the user field is a discrete RU or a contiguous RU.

In this way, the bandwidth can support hybrid transmission of a discrete RUs and a contiguous RU, that is, the bandwidth may include both a discrete RU and a contiguous RU. In addition, based on the RU type indication information in the user field, the receive end can determine whether an RU allocated to the receive end is a discrete RU or a contiguous RU, so that the receive end can obtain resource unit allocation information based on a correspondence between a discrete RU or a contiguous RU and a subcarrier, to accurately obtain a subcarrier range of a resource unit allocated to the receive end.

In still another possible implementation, the trigger frame includes a user information list field, and the user information list field includes a plurality of user fields and one special user field. A station identifier included in the special user field is a special station identifier. The special station identifier may be, for example, but is not limited to 2046. The special user field indicates that an RU allocated to a station corresponding to a user field before the special user field is a discrete RU, and an RU allocated to a station corresponding to a user field after the special user field is a contiguous RU; or the special user field indicates that an RU allocated to a station corresponding to a user field before the special user field is a contiguous RU, and an RU allocated to a station corresponding to a user field after the special user field is a discrete RU.

In this way, if only an RU allocated to a part of stations includes a discrete RU, in the trigger frame, a user field of the part of stations for which an allocated RU includes a discrete RU does not need an additional bit to carry the RU type indication information. The part of stations for which an allocated RU includes a discrete RU can determine, based on the special user field, whether an RU allocated to the station is a discrete RU, thereby reducing overheads of the user field.

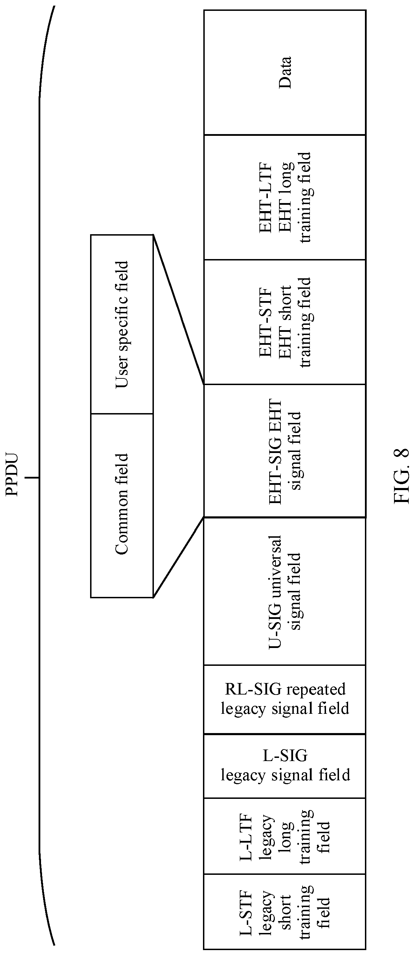

FIG. 8 is a schematic diagram of a structure of a PPDU. The PPDU includes a legacy short training field (Legacy Short Training Field, L-STF), a legacy long training field (Legacy Long Training Field, L-LTF), a legacy signal field (Legacy Signal Field, L-SIG), a repeated legacy signal field (RL-SIG), a universal signal field U-SIG (universal SIG, U-SIG), an ultra high throughput signal field or extremely high throughput signal field (extremely high throughput, EHT-SIG), an EHT short training field (EHT-STF), an EHT long training field (EHT-LTF), and data (data). The L-STF, the L-LTF, the L-SIG, the RL-SIG, the U-SIG, the EHT-SIG, the EHT-STF, and the EHT-LTF are a part of structures in a physical layer header (or referred to as a preamble part) of the PPDU.

The L-STF, the L-LTF, and the L-SIG may be understood as legacy preamble fields, and are used to ensure coexistence of a new device and a legacy device. The RL-SIG is used to enhance reliability of a legacy signal field.

The U-SIG and the EHT-SIG are signal fields. The U-SIG carries some common information. The EHT-SIG includes resource allocation information, user information, information indicating data demodulation, and the like. The EHT-SIG may indicate that the EHT-STF, the EHT-LTF, and the data field are transmitted based on a discrete RU. In this way, it is convenient for a receive end to receive the EHT-STF, the EHT-LTF, and the data field for transmission in a discrete RU receiving manner.

In an optional solution, in an uplink multi-user transmission scenario, a bandwidth is greater than or equal to 40 MHz. An RU allocated to a station includes a discrete RU, the discrete RU includes a plurality of sub-RUs, and each of the plurality of sub-RUs is located on different 20 MHz in the bandwidth. The station to which the discrete RU is allocated transmits a PPDU to the access point. Specifically, the station transmits a legacy preamble part of the PPDU in 20 MHz in which the plurality of sub-RUs of the allocated discrete RU are located. In this way, a transmit bandwidth of the legacy preamble can be increased, thereby increasing transmit power of the legacy preamble. A legacy preamble on 20 MHz also protects a sub-RU located on the 20 MHz.

In a scenario in which the bandwidth includes a discrete RU, a symbol length of the EHT-LTF in the PPDU excluding the guard interval is 12.8 microseconds (4X symbols) or 6.4 microseconds (2X symbols).

Optionally, a receive end of the PPDU, for example, a station, does not perform a smoothing operation when performing channel estimation. This avoids inaccurate channel estimation caused by noncontiguous subcarriers of the discrete RU.

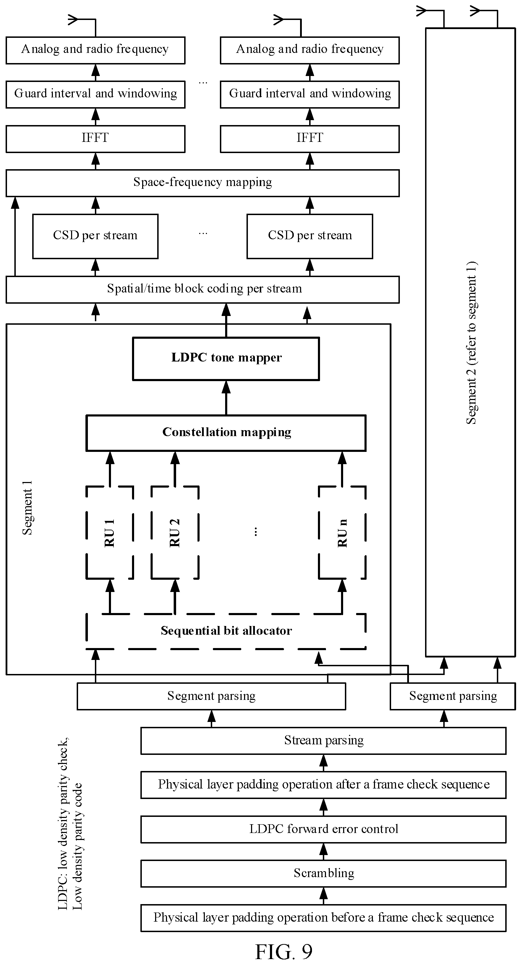

Further, FIG. 9 is a schematic diagram of a process of sending a PPDU. In a process in which a transmit end of a PPDU sends the PPDU, when space-frequency mapping is performed, frequency mapping of the space-frequency mapping needs to be performed based on subcarriers of a discrete RU.

Correspondingly, in a process in which a receive end of the PPDU receives the PPDU, when space-frequency inverse mapping is performed, inverse mapping of frequency mapping in the space-frequency inverse mapping needs to be performed based on the subcarriers of the discrete RU.

Optionally, when the AP and the STA are associating, negotiation may be performed between the AP and the STA by using at least one of an association request frame, an association response frame, or a beacon frame, so as to negotiate whether a discrete RU is supported. In this way, whether to allocate a discrete RU to a user can be flexibly selected, so that a resource unit allocation manner is more flexible.

The foregoing embodiments of this application describe the method provided in embodiments of this application from perspectives of the access point and the station. To implement functions in the method provided in embodiments of this application, the access point and the station may include a hardware structure and a software module, and implement the functions in a form of the hardware structure, the software module, or a combination of the hardware structure and the software module. A function in the foregoing functions may be performed in the form of the hardware structure, the software module, or the combination of the hardware structure and the software module.

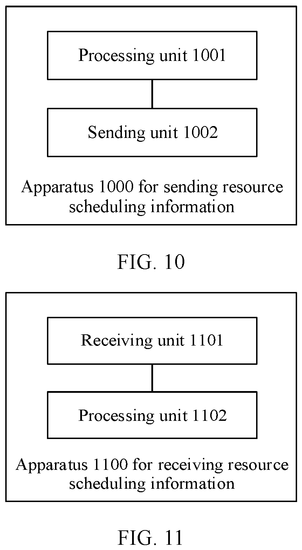

FIG. 10 is a schematic diagram of a structure of an apparatus for sending resource scheduling information. The apparatus 1000 for sending resource scheduling information in this embodiment of this application includes a processing unit 1001 and a sending unit 1002. The processing unit 1001 is configured to generate resource scheduling information based on a plurality of resource units obtained by dividing a to-be-allocated frequency domain resource. The resource scheduling information includes: resource unit allocation information for indicating one or more resource units and station information of a station to which the one or more resource units are allocated, where the one or more resource units allocated to one station include at least one discrete resource unit, the discrete resource unit includes a plurality of subcarrier groups that are discrete in frequency domain, and one subcarrier group includes one subcarrier or includes at least two contiguous subcarriers. The sending unit 1002 is configured to send the resource scheduling information.

The apparatus 1000 for sending resource scheduling information is a communication apparatus, and the communication apparatus may be, for example, the communication apparatus 200 shown in FIG. 2. The communication apparatus may be a station or an access point. For example, the processing unit 1001 of the apparatus for sending resource scheduling information may be deployed on the processor 201 of the communication apparatus 200, and the sending unit 1002 of the apparatus for sending resource scheduling information may be deployed on the transceiver 205 of the communication apparatus 200.

FIG. 11 is a schematic diagram of a structure of an apparatus for sending resource scheduling information. The apparatus 1100 for receiving resource scheduling information in this embodiment of this application includes a receiving unit 1101 and a processing unit 1102. The receiving unit 1101 is configured to receive resource scheduling information. The resource scheduling information includes: resource unit allocation information for indicating one or more resource units and station information of a station to which the one or more resource units are allocated, where the one or more resource units allocated to one station include at least one discrete resource unit, the discrete resource unit includes a plurality of subcarrier groups that are discrete in the frequency domain, and one subcarrier group includes one subcarrier or at least two contiguous subcarriers. The processing unit 1102 is configured to determine a resource unit allocation status based on the resource scheduling information.

The apparatus 1100 for receiving resource scheduling information is a communication apparatus, and the communication apparatus may be, for example, the communication apparatus 200 shown in FIG. 2. The communication apparatus may be a station or an access point. For example, the processing unit 1101 of the apparatus for receiving resource scheduling information may be deployed on the processor 201 of the communication apparatus, and the sending unit 1102 of the apparatus for receiving resource scheduling information may be deployed on the transceiver 205 of the communication apparatus.

In the technical solution of this embodiment of this application, a discrete RU is defined, and discrete RUs can be allocated to a station, that is, a plurality of subcarriers or a plurality of subcarrier groups that are discrete in frequency domain can be allocated to one station, so that a frequency domain resource allocated to the station is more flexible, and is not limited to one or two contiguous frequency domain resources. Therefore, frequency domain resources can be more fully and flexibly used, frequency diversity of RUs allocated to a single user is improved, and subcarriers of a single RU covers a wider frequency range, thereby improving transmission reliability.

Optionally, a discrete RU includes N subcarriers. A quantity of MHz occupied by the discrete RU is greater than a quantity of MHz occupied by a contiguous RU with N subcarriers. A minimum granularity of quantity of MHz is 1.

The quantity of MHz occupied by the discrete RU is a quantity of MHz occupied by N subcarriers of the discrete RU. The bandwidth includes a plurality of MHz, and at least one subcarrier of a discrete RU is distributed on one MHz. Even if the subcarriers of the discrete RU do not occupy the entire MHz, the one MHz is counted into a quantity of MHz occupied by the discrete RU.

The maximum power spectrum density refers to a maximum transmit power for 1 MHz. A minimum granularity of the maximum power spectrum density is 1 MHz.

When the transmit power of 1 MHz is not changed, for a discrete RU and a contiguous RU that include a same quantity of subcarriers, a quantity of MHz occupied by the discrete RU is greater than a quantity of MHz occupied by the contiguous RU. In this way, when the maximum power spectrum density is the same, the total transmit power of the discrete RU is higher than the total transmit power of the contiguous RU. In addition, compared with the contiguous RU, when data is transmitted by using the discrete RU, a transmit power of a single RU can be increased, thereby increasing a transmit power on a single subcarrier, and improving an equivalent signal-to-noise ratio (signal to noise ratio, SNR).

It should be understood that related descriptions of the foregoing embodiments of the resource scheduling method are also applicable to the apparatus 1000 for sending resource scheduling information and the apparatus 1100 for receiving resource scheduling information in embodiments of this application. Details are not described herein again.

An embodiment of this application further provides a computer-readable storage medium storing a computer program. When the computer-readable storage medium is executed by a computer, the function in any one of the foregoing method embodiments is implemented.

An embodiment of this application further provides a computer program product. When the computer program product is executed by a computer, functions of any one of the foregoing method embodiments are implemented.

An embodiment of this application further provides a processor, configured to perform the steps that can be performed by the apparatus for sending resource scheduling information in any one of the foregoing method embodiments, or configured to perform the steps that can be performed by the apparatus for receiving resource scheduling information in any one of the foregoing method embodiments. In a process of performing the methods, processes of sending the foregoing information and receiving the foregoing information in the foregoing methods may be understood as a process of outputting the foregoing information by the processor and a process of receiving the foregoing input information by the processor. Specifically, when outputting the foregoing information, the processor outputs the information to a transceiver, so that the transceiver transmits the information. Further, after the foregoing information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

In this way, unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In a specific implementation process, the processor may be a processor specially configured to perform the methods, or may be a processor, for example, a general purpose processor, that executes computer instructions in a memory to perform the methods. The memory may be a non-transitory (non-transitory) memory such as a read-only memory (read only memory, ROM). The memory and the processor may be integrated on a same chip, or may be separately disposed on different chips. A type of the memory and a manner of disposing the memory and the processor are not limited in embodiments of the present invention.

An embodiment of this application further provides a chip system. The chip system includes a processor and an interface, configured to support a communication transmission device in implementing a function of the access point or the station in any one of the foregoing method embodiments, for example, determining or processing at least one of data and information in the foregoing method. In a possible design, the chip system further includes a memory, and the memory is configured to store information and data that are necessary for the foregoing communication apparatus. The chip system may include a chip, or may include a chip and another discrete device.

An embodiment of this application provides a functional entity, and the functional entity is configured to implement the foregoing resource scheduling method.

It should be further understood that "first", "second", "third", "fourth", and various numbers in this specification are merely used for differentiation for ease of description, and are not intended to limit the scope of this application.

The term "and/or" in this specification describes only an association relationship for describing associated objects and indicates that there may be three relationships. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located on one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An apparatus for sending resource scheduling information, comprising a processing unit and a sending unit, wherein
the processing unit is configured to generate resource scheduling information based on a plurality of resource units obtained by dividing a to-be-allocated frequency domain resource, wherein the resource scheduling information comprises resource unit allocation information for indicating one or more resource units and station information of a station to which the one or more resource units are allocated, the one or more resource units allocated to one station comprise at least one discrete resource unit, the discrete resource unit comprises a plurality of subcarrier groups discrete in frequency domain, and one subcarrier group comprises one subcarrier or at least two contiguous subcarriers; and
the sending unit is configured to send the resource scheduling information.

2. An apparatus for receiving resource scheduling information, comprising a receiving unit and a processing unit, wherein
the receiving unit is configured to receive resource scheduling information, wherein the resource scheduling information comprises resource unit allocation information for indicating one or more resource units and station information of a station to which the one or more resource units are allocated, the one or more resource units allocated to one station comprise at least one discrete resource unit, the discrete resource unit comprises a plurality of subcarrier groups discrete in frequency domain, and one subcarrier group comprises one subcarrier or at least two contiguous subcarriers; and
the processing unit is configured to determine a resource unit allocation status based on the resource scheduling information.

3. The apparatus according to claim 1 or 2, wherein the at least one discrete resource unit allocated to the one station comprises a pilot subcarrier.

4. The apparatus according to any one of claims 1 to 3, wherein a location of the pilot subcarrier in the discrete resource unit is the same as a location of the pilot subcarrier when the pilot subcarrier is used as the pilot subcarrier in a contiguous resource unit.

5. The apparatus according to claim 1 or 2, wherein in the plurality of discrete subcarrier groups comprised in the discrete resource unit, every two adjacent subcarrier groups are spaced by a same quantity of subcarriers.

6. The apparatus according to claim 1 or 2, wherein each of the subcarrier groups comprises a same quantity of subcarriers, or at least two subcarrier groups comprise different quantities of subcarriers.

7. The apparatus according to claim 5 or 6, wherein the resource unit allocation information indicates an index of the discrete resource unit.

8. The apparatus according to claim 5 or 6, wherein the resource unit allocation information indicates an index of a start subcarrier and a subcarrier spacing in the discrete resource unit; or the resource unit allocation information indicates an index of an end subcarrier and a subcarrier spacing in the discrete resource unit, wherein
the start subcarrier is a subcarrier with a lowest frequency in the discrete resource unit, the end subcarrier is a subcarrier with a highest frequency in the discrete resource unit, and the subcarrier spacing indicates a quantity of subcarriers that belong to another resource unit that are used as a spacing of between every two adjacent subcarriers in the discrete resource unit.

9. The apparatus according to claim 5 or 6, wherein the resource unit allocation information indicates an index of a first subcarrier in a start subcarrier group in the discrete resource unit, a quantity of subcarriers comprised in the subcarrier group, and a subcarrier group spacing; or the resource unit allocation information indicates an index of a last subcarrier in a start subcarrier group in the discrete resource unit, a quantity of subcarriers comprised in the subcarrier group, and a subcarrier group spacing, wherein
the start subcarrier group is a subcarrier group with a lowest frequency in the discrete unit, and the subcarrier group spacing indicates a quantity of subcarriers between every two adjacent subcarrier groups.

10. The apparatus according to any one of claims 1 to 9, wherein the resource scheduling information further comprises resource unit type indication information, and the resource unit type indication information indicates whether a resource unit allocated to the station is a discrete resource unit or a contiguous resource unit.

11. The apparatus according to any one of claims 1 to 10, wherein the discrete resource unit comprises at least 26 subcarriers.

12. A resource scheduling method, comprising:
generating resource scheduling information based on a plurality of resource units obtained by dividing a to-be-allocated frequency domain resource, wherein the resource scheduling information comprises resource unit allocation information for indicating one or more resource units and station information of a station to which the one or more resource units are allocated, the one or more resource units allocated to one station comprise at least one discrete resource unit, the discrete resource unit comprises a plurality of subcarrier groups discrete in frequency domain, and one subcarrier group comprises one subcarrier or at least two contiguous subcarriers; and
sending the resource scheduling information.

13. A resource scheduling information obtaining method, comprising:
receiving resource scheduling information, wherein the resource scheduling information comprises resource unit allocation information for indicating one or more resource units and station information of a station to which the one or more resource units are allocated, the one or more resource units allocated to one station comprise at least one discrete resource unit, the discrete resource unit comprises a plurality of subcarrier groups discrete in frequency domain, and one subcarrier group comprises one subcarrier or at least two contiguous subcarriers; and
determining a resource unit allocation status based on the resource scheduling information.

14. The method according to claim 12 or 13, wherein the at least one discrete resource unit allocated to the one station comprises a pilot subcarrier.

15. The method according to any one of claims 12 to 14, wherein a location of the pilot subcarrier in the discrete resource unit is the same as a location of the pilot subcarrier when the pilot subcarrier is used as the pilot subcarrier in a contiguous resource unit.

16. The method according to claim 12 or 13, wherein in the plurality of discrete subcarrier groups comprised in the discrete resource unit, every two adjacent subcarrier groups are spaced by a same quantity of subcarriers.

17. The method according to claim 12 or 13, wherein each of the subcarrier groups comprises a same quantity of subcarriers, or at least two subcarrier groups comprise different quantities of subcarriers.

18. The method according to claim 16 or 17, wherein the resource unit allocation information indicates an index of the discrete resource unit.

19. The method according to claim 16 or 17, wherein the resource unit allocation information indicates an index of a start subcarrier and a subcarrier spacing in the discrete resource unit; or the resource unit allocation information indicates an index of an end subcarrier and a subcarrier spacing in the discrete resource unit, wherein
the start subcarrier is a subcarrier with a lowest frequency in the discrete resource unit, the end subcarrier is a subcarrier with a highest frequency in the discrete resource unit, and the subcarrier spacing indicates a quantity of subcarriers that belong to another resource unit that are used as a spacing of between every two adjacent subcarriers in the discrete resource unit.

20. The method according to claim 16 or 17, wherein the resource unit allocation information indicates an index of a first subcarrier in a start subcarrier group in the discrete resource unit, a quantity of subcarriers comprised in the subcarrier group, and a subcarrier group spacing; or the resource unit allocation information indicates an index of a last subcarrier in a start subcarrier group in the discrete resource unit, a quantity of subcarriers comprised in the subcarrier group, and a subcarrier group spacing, wherein
the start subcarrier group is a subcarrier group with a lowest frequency in the discrete unit, and the subcarrier group spacing indicates a quantity of subcarriers between every two adjacent subcarrier groups.

21. The method according to any one of claims 12 to 20, wherein the resource scheduling information further comprises resource unit type indication information, and the resource unit type indication information indicates whether a resource unit allocated to the station is a discrete resource unit or a contiguous resource unit.

22. The method according to any one of claims 12 to 21, wherein the discrete resource unit comprises at least 26 subcarriers.

23. An apparatus for sending resource scheduling information, wherein the apparatus for sending resource scheduling information comprises a processor and a transceiver; and when the processor executes a computer program or instructions in the memory, the method according to any one of claims 12 to 22 is performed.

24. A computer-readable storage medium, wherein the computer-readable storage medium stores computer instructions, and the computer instructions instruct a communication apparatus to perform the method according to claims 1 to 10, or perform the method according to claims 12 to 22.

25. A computer program product comprising instructions, wherein when the instructions are run on a computer, the computer is enabled to perform the method according to claims 12 to 22.
